(19) Europäisches Patentamt
European Patent Office
Office européen des brevets

(11) **EP 3 227 552 B1**

(12) **EUROPÄISCHE PATENTSCHRIFT**

(45) Veröffentlichungstag und Bekanntmachung des Hinweises auf die Patenterteilung:
**03.07.2019   Patentblatt 2019/27**

(51) Int Cl.:
*F03D 7/02* (2006.01)     *F03D 80/00* (2016.01)
*F03D 1/06* (2006.01)     *G01P 15/093* (2006.01)
*F03D 17/00* (2016.01)     *F03D 80/30* (2016.01)

(21) Anmeldenummer: **15802137.8**

(22) Anmeldetag: **01.12.2015**

(86) Internationale Anmeldenummer:
**PCT/EP2015/078237**

(87) Internationale Veröffentlichungsnummer:
**WO 2016/087455 (09.06.2016 Gazette 2016/23)**

(54) **VERFAHREN ZUR INDIVIDUELLEN PITCHREGELUNG VON ROTORBLÄTTERN EINER WINDKRAFTANLAGE UND WINDKRAFTANLAGEN**

METHOD FOR THE INDIVIDUAL PITCH CONTROL OF ROTOR BLADES OF A WIND TURBINE, AND WIND TURBINES

PROCÉDÉ POUR RÉGULER INDIVIDUELLEMENT LE PAS DE PALES DE ROTOR D'UNE ÉOLIENNE ET ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2014   DE 102014117918**

(43) Veröffentlichungstag der Anmeldung:
**11.10.2017   Patentblatt 2017/41**

(73) Patentinhaber: **FOS4X GmbH**
**81371 München (DE)**

(72) Erfinder:
• **MÜLLER, Mathias**
**82194 Gröbenzell (DE)**
• **SCHUBERT, Matthias**
**20149 Hamburg (DE)**

(74) Vertreter: **Zimmermann & Partner**
**Patentanwälte mbB**
**Josephspitalstr. 15**
**80331 München (DE)**

(56) Entgegenhaltungen:
**WO-A2-2010/099928     WO-A2-2012/125842**
**DE-A1-102012 108 776**

**Beschreibung**

TECHNISCHES GEBIET

Ausführungsformen der vorliegenden Erfindung betreffen im Allgemeinen eine Steuerung und/oder Regelung bzw. Überwachung des Betriebs von Windkraftanlagen sowie die hierzu verwendeten Komponenten wie Beschleunigungssensoren und/oder die korrespondierenden Komponenten einer Windkraftanlage. Insbesondere betreffen Ausführungsformen ein Verfahren zur individuellen Pitchregelung von Rotorblättern einer Windkraftanlage, ein Rotor einer Windkraftanlage, und eine Windkraftanlage.

STAND DER TECHNIK

Windenergieanlagen unterliegen einer komplexen Steuerung, die zum Beispiel durch wechselnde Betriebsbedingungen notwendig sein kann. Durch die mit dem Betrieb einer Windkraftanlage verknüpften Bedingungen, zum Beispiel Temperaturschwankungen, Witterung und Wetterverhältnisse, aber auch insbesondere stark wechselnde Windverhältnisse, sowie durch die Vielzahl von gesetzlich vorgeschriebenen Sicherheitsmaßnahmen sind die Überwachung und die für die Überwachung notwendigen Sensoren einer Vielzahl von Randbedingungen unterworfen.

Zum Beispiel ist es zur Verbesserung von Windkraftanlagen heutzutage erstrebenswert, eine individuelle Pitchregelung zur Verfügung zu stellen, um entsprechend der äußeren Bedingungen einen optimierten Betrieb zu gewährleisten. Hierzu ist eine verbesserte Erkennung der auf die Windkraftanlage wirkenden Kräfte bzw. des Betriebszustandes erstrebenswert.

Bei der Überwachung von Betriebszuständen von Windenergieanlagen und der Steuerung bzw. Regelung von Windkraftanlagen wird eine Mehrzahl von Sensoren verwendet. Zum Beispiel können Dehnungsmessungen zur Messung der Biegung eines Rotorblatts, Beschleunigungsmessungen zur Messung einer Beschleunigung eines Rotorblatts, oder andere Größen gemessen werden. Eine Gruppe von Sensoren, die als Erfolg versprechend für zukünftige Applikationen erscheint, sind faseroptische Sensoren. Es ist daher erstrebenswert, Messungen zur Überwachung einer Windkraftanlage mit faseroptischen Sensoren weiter zu verbessern. Die Druckschrift WO 2012/125842 A1 beschreibt ein Verfahren zum Regeln einer Windkraftanlage. Die Druckschrift DE 10 2012 108776 A1 beschreibt die Verwendung faseroptischer Beschleunigungssensoren in Rotorblättern von Windenergieanlagen. Die Druckschrift WO 2010/099928 A1 beschreibt ein Verfahren zum Überwachen von Windturbinen.

Im Allgemeinen ist es somit erstrebenswert Verbesserungen bei der Steuerung und Überwachung, bei den Sensoren für ein Rotorblatt einer Windkraftanlage, bei Rotorblättern für Windkraftanlagen, und Windkraftanlagen selbst zu ermöglichen.

ZUSAMMENFASSUNG DER ERFINDUNG

Gemäß einer Ausführungsform wird ein Verfahren zur individuellen Pitchregelung von Rotorblättern einer Windkraftanlage zur Verfügung gestellt. Das Verfahren beinhaltet ein Messen einer Beschleunigung mit einem faseroptischen Beschleunigungssensor in einem Rotorblatt der Windkraftanlage; ein opto-elektronisches Wandeln eines Signals des faseroptischen Beschleunigungssensors, ein Filtern des opto-elektronisch gewandelten Beschleunigungssignals mit einem analogen Anti-aliasing-Filter, ein Hochpassfiltern des Signals des Beschleunigungssensors zur Ermittlung einer zeitveränderlichen Größe, und ein Pitchen des ersten Rotorblatts der Windkraftanlage mittels der zeitveränderlichen Größe, wobei das Pitchen im Rahmen einer individuellen Pitchregelung erfolgt.

Gemäß einer Ausführungsform wird eine Windkraftanlage mit den Merkmalen des Patentanspruchs 11 zur Verfügung gestellt. Die Windkraftanlage beinhaltet ein erstes Rotorblatt, das an einer Nabe montiert ist; ein erster Antrieb zur Rotation des ersten Rotorblatts für eine Pitchregelung des ersten Rotorblatts; zumindest ein zweites Rotorblatt, das an der Nabe montiert ist; zumindest ein zweiter Antrieb zur Rotation des zweiten Rotorblatts für eine Pitchregelung des zweiten Rotorblatts, wobei der zweite Antrieb unabhängig vom ersten Antrieb ansteuerbar ist; eine Steuerung zum Ansteuern von zumindest dem ersten Antrieb; einen erster Beschleunigungssensor in dem ersten Rotorblatt der Windkraftanlage; Mittel zum Hochpassfiltern eines Signals des ersten Beschleunigungssensors zur Ermittlung einer zeitveränderlichen Größe; und eine Steuerung, wobei die Steuerung konfiguriert ist ein Pitchen des ersten Rotorblatts mittels der zeitveränderlichen Größe zu steuern.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1 zeigt schematisch ein Rotorblatt einer Windkraftanlage mit einem Beschleunigungssensor gemäß hier beschriebenen Ausführungsformen;

Figur 2 zeigt schematisch einen Teil einer Windkraftanlage mit Rotorblättern und Beschleunigungssensoren gemäß hier beschriebenen Ausführungsformen;

Figur 3 zeigt schematisch einen Lichtleiter mit einem Faser-Bragg-Gitter zur Verwendung in Beschleunigungssensoren gemäß hier beschriebenen Ausführungsformen;

Figur 4 zeigt schematisch eine Ausgestaltung eines Beschleunigungssensor gemäß hier beschriebenen Ausführungsformen bzw. zur Verwendung in hier beschriebenen Ausführungsformen;

Figur 5 zeigt schematisch einen Rotor einer Windkraftanlage mit Rotorblättern und Beschleunigungssensoren gemäß hier beschriebenen Ausführungsformen bzw. zur Verwendung in hier beschriebenen Ausführungsformen;

Figur 6 zeigt schematisch einen Messaufbau für einen faseroptischen Beschleunigungssensor gemäß hier beschriebenen Ausführungsformen bzw. für Verfahren zur Überwachung und/oder Steuerung und/oder Regelung gemäß hier beschriebenen Ausführungsformen;

Figur 7 zeigt schematisch einen Messaufbau für einen faseroptischen Beschleunigungssensoren gemäß hier beschriebenen Ausführungsformen bzw. für Verfahren zur Überwachung und/oder Steuerung und/oder Regelung gemäß hier beschriebenen Ausführungsformen;

Figur 7A zeigt den Einfluss der Messung mit einem Anti-Aliasing-Filter gemäß hier beschriebenen Ausführungsformen;

Figuren 8A und 8B zeigen schematisch Beschleunigungssensoren zur Verwendung in hier beschriebenen Ausführungsformen;

Figuren 9A und 9B zeigen schematisch einen faseroptischen Beschleunigungssensor gemäß hier beschriebenen Ausführungsformen bzw. zur Verwendung in hier beschriebenen Ausführungsformen;

Figur 10 zeigt schematisch ein Rotorblatt einer Windkraftanlage mit einem Beschleunigungssensor gemäß hier beschriebenen Ausführungsformen;

Figur 11 zeigt schematisch ein Rotorblatt einer Windkraftanlage mit einem Beschleunigungssensor gemäß hier beschriebenen Ausführungsformen bzw. zur Verwendung in hier beschriebenen Ausführungsformen, wobei ein Profil für ein Rotorblatt gemäß hier beschriebenen Ausführungsformen zur Verfügung gestellt ist;

Figur 11A zeigt ein Profil für ein Rotorblatt gemäß Ausführungsformen der vorliegenden Erfindung;

Figuren 12, 13A und 13B zeigen schematisch einen Teil eines Rotorblatts einer Windkraftanlage mit einem Beschleunigungssensor gemäß hier beschriebenen Ausführungsformen bzw. zur Verwendung in hier beschriebenen Ausführungsformen;

Figur 14 zeigt schematisch einen weiteren Teil eines Rotorblatts einer Windkraftanlage mit einer Verbindung eines Beschleunigungssensors gemäß hier beschriebenen Ausführungsformen bzw. zur Verwendung in hier beschriebenen Ausführungsformen;

Figur 15 zeigt schematisch einen Teil eines Rotorblatts einer Windkraftanlage mit einem Beschleunigungssensor gemäß hier beschriebenen Ausführungsformen bzw. zur Verwendung in hier beschriebenen Ausführungsformen; und

Figuren 16 bis 18 zeigen Ablaufdiagramme von Verfahren zur Überwachung und/oder Steuerung und/oder Regelung von Windkraftanlagen gemäß hier beschriebenen Ausführungsformen.

In den Zeichnungen bezeichnen gleiche Bezugszeichen gleiche oder funktionsgleiche Komponenten oder Schritte.

WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

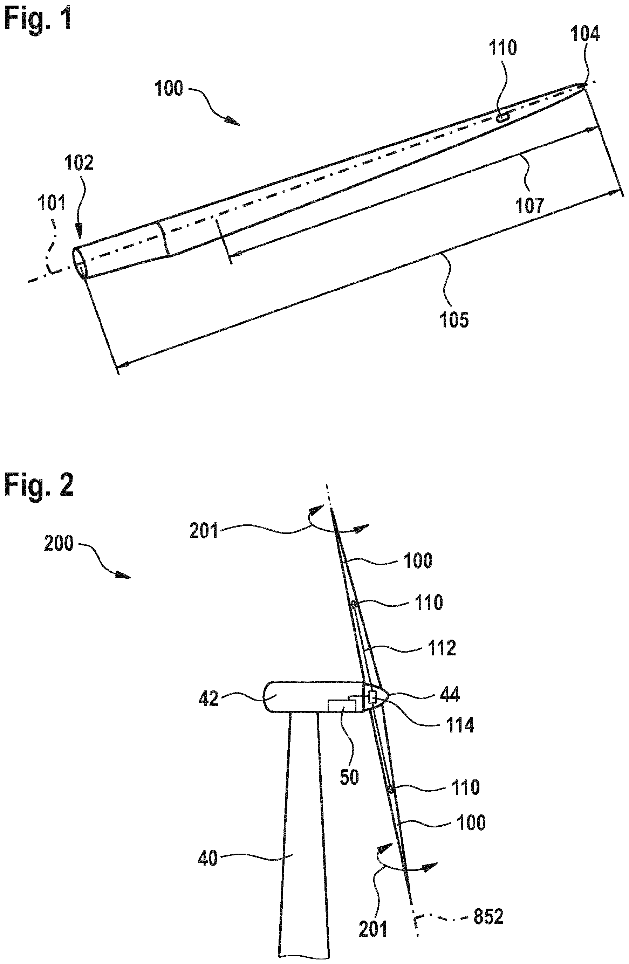

Figur 1A zeigt ein Rotorblatt 100 einer Windkraftanlage. Das Rotorblatt 100 hat eine Achse 101 entlang seiner Längserstreckung. Die Länge 105 des Rotorblatts reicht von dem Blattflansch 102 zu der Blattspitze 104. Gemäß hier beschriebenen Ausführungsformen befindet sich in einem axialen bzw. radialen Bereich, das heißt einem Bereich entlang der Achse 101, ein Beschleunigungssensor 110, wobei der Beschleunigungssensor an einer radialen Position im Bereich der äußeren 70% des Radius eines Rotorblatts der Windkraftanlage zur Verfügung gestellt ist.

Sensoren sind in der Praxis bislang nahe dem Blattflansch 102 angebracht worden. Typischerweise wurden Sensoren in der Praxis bislang in den inneren 20 % des Radius eines Rotorblatts angebracht. Diese Positionierung war bislang eine oft geforderte Voraussetzung, da für Windenergieanlagen bzw. Windkraftanlagen ein Blitzeinschlag eine ernst zu nehmende Gefahr darstellt. Zum einen kann ein Blitzeinschlag unmittelbar in elektronische Komponenten und/oder Kabel bzw. Signalkabel für elektronische Komponenten erfolgen. Zum anderen kann selbst bei einer Ableitung eines Blitzeinschlags über einen Blitzableiter, d.h. bei einer kontrollierten Ableitung zu einem Erdpotenzial, ein Schaden durch die durch Induktion erzeugten Ströme in Kabeln bzw. Signalkabeln entstehen. Bei Blitzeinschlag kann es hierbei zum einen zur Zerstörung von Komponenten einer Windkraftanlage kommen. Zum anderen können Blitzeinschläge zu einer größeren Materialermüdung führen. Dies kann zum Beispiel die Wartungskosten erheblich vergröBern. Zum Beispiel kann mit ein bis vier Blitzeinschlägen pro Jahr in ein Rotorblatt gerechnet werden.

Diese Positionierung von Sensoren nahe dem Blattflansch ist in der Praxis eine Randbedingung bzw. eine existierende Annahme, der Ausführungsformen der vorliegenden Erfindung entgegentreten. Sensoren, insbesondere Beschleunigungssensoren, können bei einer radialen Positionierung, die entgegen der gängigen Praxis im Bereich der äußeren 70 % des Radius des Rotorblatts zur Verfügung gestellt wird, verbesserte Verfahren zur Messung von Betriebszuständen einer Windkraftanlage ermöglichen.

Gemäß typischen Ausführungsformen, kann hierbei eine Positionierung eines Beschleunigungssensors entlang des Radius eines Rotorblatts wie folgt zur Verfügung gestellt werden. Bei Rotorblättern, die bis ca. 50 % bis 60 % des Radius (der Blattflanschs entspricht hier in etwa 0 % des Radius) begehbar sind, kann zumindest ein Beschleunigungssensor an einer radialen Position im Bereich der äußeren 70 % des Radius des Rotorblatts zur Verfügung gestellt werden. Bei Rotorblättern, die einen deutlich geringeren begehbaren Bereich aufweisen, kann der Vorteil einer Montage an einer begehbaren Position alternativ auch aufgegeben werden. In einem solchen Fall kann eine Montage eines Beschleunigungssensors nahe der Blattspitze, zum Beispiel in einem Bereich von 30 % bis 95 % des Radius (0 % entspricht dem Flansch an der Blattwurzel) zur Verfügung gestellt werden.

Figur 2 zeigt eine Windkraftanlage 200. Die Windkraftanlage 200 beinhaltet einen Turm 40 und eine Gondel 42. An der Gondel 42 ist der Rotor befestigt. Der Rotor beinhaltet eine Nabe 44, an der die Rotorblätter 100 befestigt sind. Gemäß typischen Ausführungsformen hat der Rotor zumindest 2 Rotorblätter insbesondere 3 Rotorblätter. Beim Betrieb der Windenergieanlage bzw. der Windkraftanlage rotiert der Rotor, d.h. die Nabe mit den Rotorblättern um eine Achse. Dabei wird ein Generator zur Stromerzeugung angetrieben. Wie in Figur 2 dargestellt, ist zumindest ein Beschleunigungssensor 110 in einem Rotorblatt 100 zur Verfügung gestellt. Der Beschleunigungssensor ist mit einer Signalleitung mit einer Auswerteeinheit 114 verbunden. Die Auswerteeinheit 114 liefert ein Signal an eine Steuerung und/oder Regelung 50 der Windkraftanlage 200.

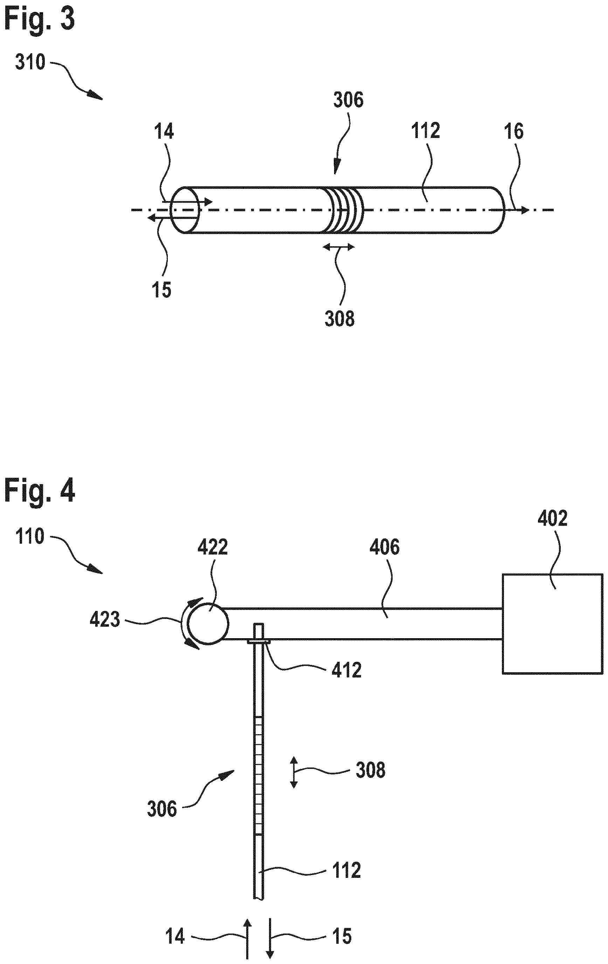

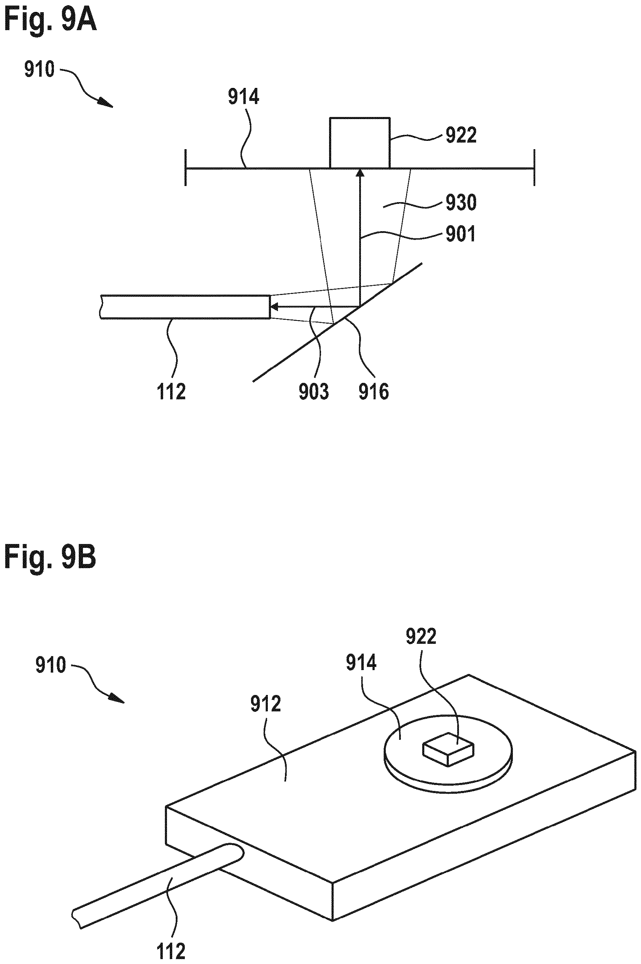

Gemäß einigen Ausführungsformen, die mit anderen Ausführungsformen kombiniert werden können, handelt es sich bei dem Beschleunigungssensor 110 um einen faseroptischen Beschleunigungssensor, insbesondere einen faseroptische Beschleunigungssensor. Für faseroptische Beschleunigungssensoren wird ein optisches Signal mittels eines Lichtleiters 112, zum Beispiel einer optischen Faser, an die Auswerteeinheit 114 übertragen. Bei einem faseroptischen Beschleunigungssensor kann das Sensorelement selbst außerhalb einer optischen Faser zur Verfügung gestellt werden. Ein Beispiel ist im Detail in Bezug auf Figuren 9A und 9B beschrieben. Alternativ hierzu kann bei einem faseroptischen Beschleunigungssensor das eigentliche Sensorelement innerhalb einer optischen Faser zur Verfügung gestellt, zum Beispiel in Form eines Faser-Bragg-Gitters. Dies ist im Detail in Bezug auf die Figuren 3 und 4 beschrieben.

Gemäß einigen hier beschriebenen Ausführungsformen, die mit anderen Ausführungsformen kombiniert werden können, ermöglichen faseroptische Beschleunigungssensoren, bei denen ein Signal optisch über einen Lichtleiter 112 übertragen wird, eine bisher in der Praxis als ungünstig angesehene radialen Position, da die Übertragung mittels eines Lichtleiters bzw. einer optischen Faser ein reduziertes Risiko eines Blitzschadens mit sich bringt. Es wird hierbei folglich ein existierendes Vorurteil der Montage von Sensoren in der Nähe des Blattflanschs überwunden. Dies kann insbesondere durch die Verwendung von metallfreien Beschleunigungssensoren bzw. im Wesentlichen metallfreien Beschleunigungssensoren, wie sie in Bezug auf Figuren 9A und 9B mehr erläutert werden, ermöglicht werden. Aber auch faseroptische Beschleunigungssensoren können derart zur Verfügung gestellt werden, dass sie eine Montage in einem radial äußeren Bereich eines Rotorblatts erlauben, ohne das Risiko eines Blitzschadens zu ignorieren.

Fig. 3 zeigt einen in einen Lichtwellenleiter integrierten Sensor bzw. einen faseroptischen Sensor 310, welche ein Faser-Bragg-Gitter 306 aufweist. Obwohl in Fig. 3 nur ein einziges Faser-Bragg-Gitter 306 gezeigt ist, ist zu verstehen, dass die vorliegende Erfindung nicht auf eine Datenerfassung aus einem einzelnen Faser-Bragg-Gitter 306 beschränkt ist, sondern dass längs eines Lichtleiters 112, einer Übertragungsfaser, einer Sensorfaser bzw. einer optischen Faser eine Vielzahl von Faser-Bragg-Gittern 306 angeordnet sein können.

Fig. 3 zeigt somit nur einen Abschnitt eines optischen Wellenleiters, welcher als Sensorfaser, optischer Faser bzw. Lichtleiter 112 ausgebildet ist, wobei diese Sensorfaser empfindlich auf eine Faserdehnung (siehe Pfeil 308) ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 306, d.h. eine so genannte Bragg-Wellenlänge $\lambda B$, wird durch die folgende Gleichung erhalten:

$$\lambda B = 2 \cdot nk \cdot \Lambda.$$

Hierbei ist nk die effektive Brechzahl des Grundmodus des Kerns der optischen Faser und $\Lambda$ die räumliche Gitterperiode (Modulationsperiode) des Faser-Bragg-Gitters 306.

Eine spektrale Breite, die durch eine Halbwertsbreite der Reflexionsantwort gegeben ist, hängt von der Ausdehnung des Faser-Bragg-Gitters 306 längs der Sensorfaser ab. Die Lichtausbreitung innerhalb der Sensorfaser bzw. des Lichtleiters 112 ist somit durch die Wirkung des Faser-Bragg-Gitters 306 beispielsweise abhängig von Kräften, Momenten und mechanischen Spannungen sowie Temperaturen, mit der die Sensorfaser, d.h. die optische Faser und insbesondere das Faser-Bragg-Gitter 306 innerhalb der Sensorfaser beaufschlagt werden.

Wie in Fig. 3 gezeigt, tritt elektromagnetische Strahlung 14 oder Primärlicht von links in die optische Faser bzw. den Lichtleiter 112 ein, wobei ein Teil die elektromagnetische Strahlung 14 als ein transmittiertes Licht 16 mit einem im Vergleich zur elektromagnetischen Strahlung 14 veränderten Wellenlängenverlauf austritt. Ferner ist es möglich, reflektiertes Licht 15 am Eingangsende der Faser (d.h. an dem Ende, an welchem auch das elektromagnetische Strahlung 14 eingestrahlt wird) zu empfangen, wobei das reflektierte Licht 15 ebenfalls eine modifizierte Wellenlängenverteilung aufweist. Das optische Signal das zur Detektion und Auswertung verwendet wird kann gemäß den hier beschriebenen Ausführungsformen durch das reflektiert Licht, durch das transmittierte Licht, sowie eine Kombination der beiden zur Verfügung gestellt werden.

In einem Fall, in dem die elektromagnetische Strahlung 14 bzw. das Primärlicht in einem breiten Spektralbereich eingestrahlt wird, ergibt sich in dem transmittierten Licht 16 an der Stelle der Bragg-Wellenlänge ein Transmissionsminimum. In dem reflektierten Licht ergibt sich an dieser Stelle ein Reflexionsmaximum. Eine Erfassung und Auswertung der Intensitäten des Transmissionsminimums bzw. des Reflexionsmaximums, oder von Intensitäten in entsprechenden Wellenlängenbereichen erzeugt eine Signal, das im Hinblick auf die Längenänderung der optischen Faser bzw. des Lichtleiters 112 ausgewertet werden kann und somit auf Kräfte bzw. Beschleunigungen Aufschluss gibt.

Figur 4 zeigt eine Vorrichtung 110 zum Detektieren einer Beschleunigung. Die Vorrichtung beinhaltet eine Masse 402, die an einem Hebelarm 406 befestigt ist. Der Hebelarm 406 hat einen Fixpunkt 422, so dass eine Bewegung des Hebelarms und der Masse, die durch Pfeil 423 dargestellt ist, ermöglicht wird. Weiterhin ist eine optische Faser bzw. ein Lichtleiter 112 mit einem Faser-Bragg-Gitter 306 an dem Hebelarm 406 befestigt. Hierbei ist die Sensorfaser mit einem Befestigungselement 412 am Hebelarm 406 befestigt. Gemäß typischen Ausführungsformen kann das Befestigungselement eine Klebestelle oder eine Klemmvorrichtung sein. Die Masse 402 ist an einer ersten Hebelposition mit dem Hebelarm 406 verbunden und die optische Faser ist an einer zweiten Hebelposition mit dem Hebelarm 406 verbunden. Eine Bewegung der Masse bzw. des Hebelarms, die durch Pfeil 423 dargestellt ist, führt zu einer Längenänderung der optischen Faser bzw. des Lichtleiter 112, die durch Pfeil 308 dargestellt ist, bzw. einer Kraftauswirkung auf die optische Faser. Hierbei erzeugt das Faser-Bragg-Gitter 306 einen von der Dehnung bzw. Längenänderung abhängigen veränderten Wellenlängenverlauf des optischen Signals wie zum Beispiel des reflektierten Lichts 15, dass durch Reflexion des Primärlichts bzw. der elektromagnetischen Strahlung 14 erzeugt wird.

Bei herkömmlichen Beschleunigungssensoren wird die Masse typischerweise durch einen Federmechanismus an der Auslegung in einer oder mehreren Raumrichtungen eingeschränkt. Im einfachsten Fall kann sich die Masse lediglich in eine Richtung bewegen. In diese Richtung wird eine Sensorfaser an der Masse befestigt, die sich bei einer Beschleunigung der Masse dehnt. Bei einer solchen Anordnung sind die maximale Dehnung und damit die Empfindlichkeit der Faser durch das Gewicht der Masse und die Steifigkeit der Faser gegeben. Hierbei kann, um die Empfindlichkeit eines solchen Sensors zu steigern, lediglich die Masse vergrößert werden. Für empfindliche Sensoren kann dies zu Massen von bis zu mehreren 100 g Gewicht führen. Ein weiterer Nachteil einer solchen Anordnung ist, dass hierbei die Resonanzfrequenz f des Faser-Masse-Systems eine Abhängigkeit f ~ Wurzel(k/m) hat, die folglich mit steigender Masse abnimmt. Hierbei ist k die Federsteifigkeit des Faser-Masse-Systems. Da die minimale Federsteifigkeit durch die Steifigkeit der Faser beschränkt ist, lässt sich somit nur ein eingeschränkter Bereich konfigurieren.

Durch die Verwendung eines Hebelarm kann diese Beschränkung des zu konfigurieren Bereichs aufgehoben bzw. verringert werden. Wie bereits in Figur 4 zu erkennen ist, kann durch eine Veränderung der Befestigungsposition der optischen Faser entlang des Hebelarms 406, d.h. einer Veränderung der zweiten Hebelposition, an der die optische Faser bzw. der Lichtleiter 112 befestigt ist, eine Veränderung der Empfindlichkeit der Vorrichtung zum Detektieren einer Beschleunigung bereitgestellt werden. Die Empfindlichkeit kann somit verändert werden ohne hierzu die Masse 402 zu verändern und somit die Resonanzfrequenz zu beeinflussen.

Somit erlauben es Ausführungsformen gemäß FIG. 4 den Zusammenhang zwischen Steifigkeit der Faser, Empfindlichkeit, sowie Resonanzfrequenz zu brechen. Durch den Einsatz eines mechanischen Hebels wird das Verhältnis aus Auslenkung der Faser und notwendiger Kraft beliebig konfigurierbar. Ferner erlaubt die Verwendung eines Hebelarms eine vergrößerte Kraft an der Faser auch mit einer kleinen Masse bzw. einer konstanten Masse.

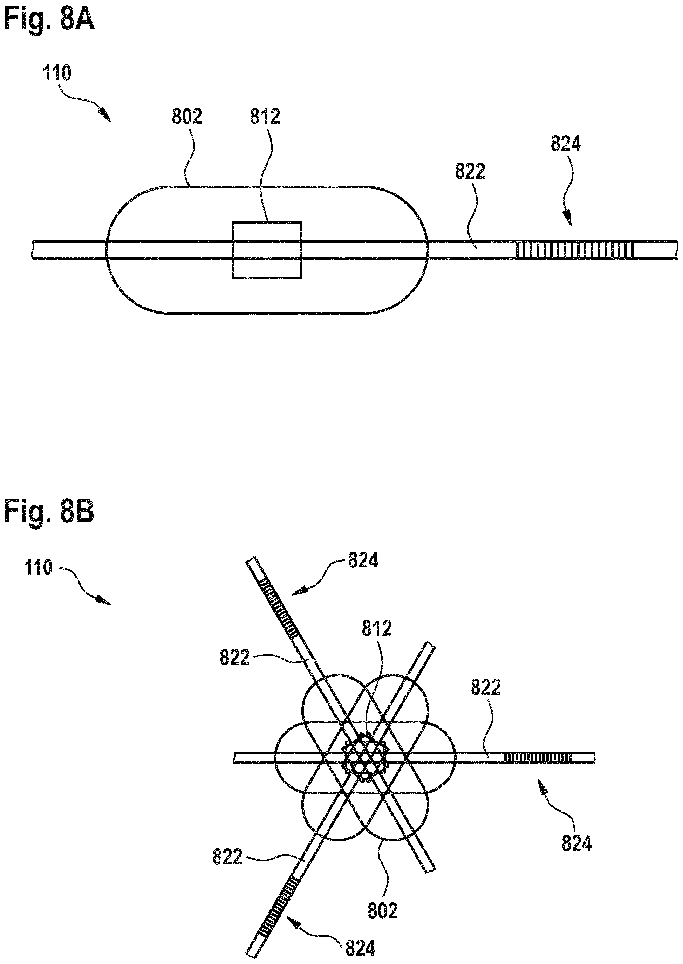

Die durch Pfeil 423 dargestellte Bewegung ist eine Bewegung des Hebelarm 406 bzw. der Masse 402 in der Papierebene von Figur 4. Typischerweise kann der Fixpunkt 422 derart ausgestaltet sein, dass eine Bewegung lediglich in einer Ebene erfolgt. Gemäß weiteren Ausführungsformen kann eine Bewegung jedoch auch in zwei Ebenen oder sogar drei Ebenen erfolgen. Bei einer solchen Ausführungsform mit mehreren Bewegungsebenen können weitere optische Fasern mit jeweils einem Faser-Bragg-Gitter 306 mit dem Hebelarm 406 verbunden sein, so dass eine Detektion einer Beschleunigung in mehreren Raumrichtungen erfolgen kann. Gemäß typischen Ausführungsformen, wird eine Vorrichtung zum mehrdimensionalen Detektieren einer Beschleunigung jedoch wie in Bezug auf Figur 8B beschrieben ausgeführt.

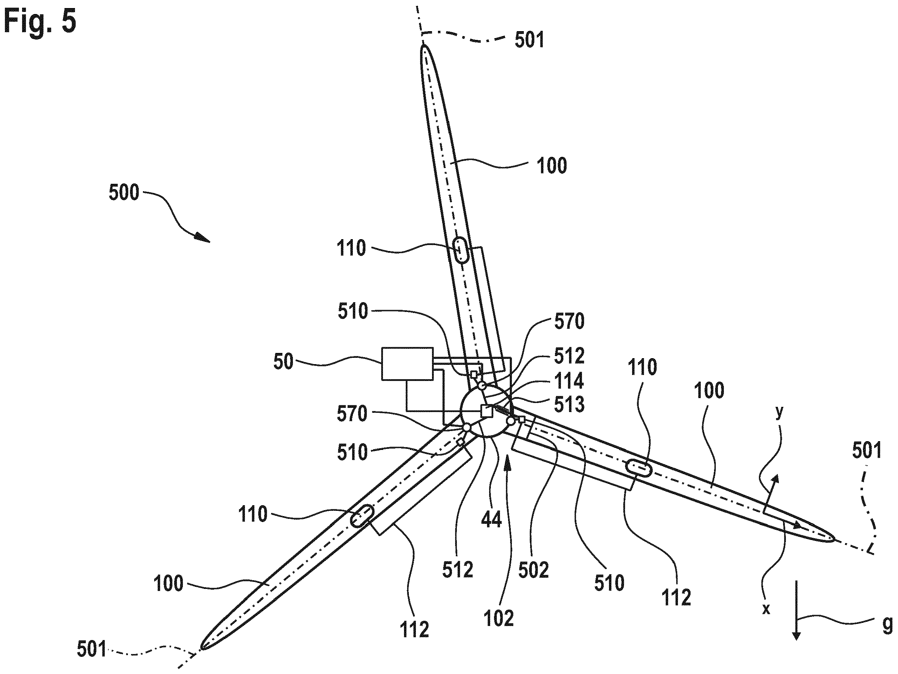

Figur 5 zeigt einen Rotor 500 einer Windkraftanlage. Der Rotor 500 hat eine Nabe 44 und daran angebrachte Rotorblätter 100. In zumindest einem der Rotorblätter 100 ist ein Beschleunigungssensor 110 zur Verfügung gestellt. Das Signal des Beschleunigungssensors 110 wird über einen Lichtleiter 112 an einen Verteiler 510 geleitet. Der Verteiler 510 kann zum Beispiel ein Feldverteiler sein, an dem mehrere Signale von unterschiedlichen Sensoren zur Verfügung gestellt werden.

Gemäß manchen Ausführungsformen, die mit anderen Ausführungsformen kombiniert werden können, kann der Verteiler bzw. der Feldverteiler am Blattschott des Rotorblatts angebracht sein. Der Verteiler kann zum An- und Abstecken eines Signalkabels eines Sensors ausgebildet sein. Ferner kann ein Sensorkabel zum An- und Abstecken vom Feldverteiler zum Messgerät bzw. zur Auswerteeinheit zur Verfügung gestellt sein. Gemäß manchen Ausführungsformen, die mit anderen Ausführungsformen kombiniert werden können, ist der Verteiler 510 am Blattschott oder in der Blattwurzel zur Verfügung gestellt.

Der Bereich der Blattwurzel ist durch die Trennlinie 502 illustriert. Typischerweise erstreckt sich die Blattwurzel von einem Blattflansch 102, mit dem das Rotorblatt 100 an der Nabe 44 befestigt ist, radial, d.h. entlang der Längserstreckung des Rotorblatts, über eine Länge von 1 m bis 3 m.

Wie in Figur 5 dargestellt, kann gemäß manchen Ausführungsformen ein Lichtleiter 512 bzw. eine optische Faser von dem Verteiler 510 zu der Auswerteeinheit 114 geführt werden. Zum Beispiel kann der Lichtleiter 512 entlang einer Feder oder einer Spirale 513 bzw. durch eine Feder oder eine Spirale 513 oder ein entsprechendes mechanisches Element geführt werden, so dass bei einer Rotation des Rotorblatts 100 um seine Längsachse, d.h. beim Pitchen des Rotorblatts, der Lichtleiter nicht beschädigt wird. Die mechanische Führung des Lichtleiters 512 entlang einer Spirale bzw. durch eine Spirale 513 erlaubt eine Torsion des Lichtleiters, so dass beim Pitchen des Rotorblatts der Lichtleiter nicht beschädigt wird

Eine Mehrzahl der in den Figuren beschriebenen Ausführungsformen zeigt einen Beschleunigungssensor in jeweils einem der Rotorblätter. Gemäß weiteren Ausführungsformen, die mit anderen Ausführungsformen kombiniert werden können, kann eine Messung der Beschleunigung an mehreren Positionen eines Rotorblatts, insbesondere an mehreren radialen Positionen im Bereich der äußeren 70 % des Radius des Rotorblatts, durchgeführt werden. Hierzu können mehrere Beschleunigungssensoren an den jeweiligen radialen Position zur Verfügung gestellt sein. Durch die Messung an mehreren radialen Positionen kann zum einen die Messgenauigkeit erhöht werden. Gemäß noch weiteren Ausführungsformen, die mit anderen Ausführungsformen kombiniert werden können, kann ein Beschleunigungssensor oder mehrere Beschleunigungssensoren auch mit zumindest einem weiteren Sensor kombiniert werden. Der zumindest eine weitere Sensor kann ausgewählt sein aus einem oder mehreren Sensoren aus der Gruppe bestehend aus: einem Dehnungssensor, einem Temperatursensor, einem Drucksensor, einem Schallpegelsensor, und einem Inklinometer (zur Messung der Position der Rotation des Rotors).

Darüber hinaus ist die Messung der Temperatur am Rotorblatt zur Auswertung der Signale des bzw. der Beschleunigungssensoren vorteilhaft, da durch die Temperatur die Blatteigenschaften, wie zum Beispiel die Eigenfrequenz, beeinflusst werden. Eine Korrelation der Blatteigenschaften mit den Signalen des bzw. der Beschleunigungssensoren führt zu einer präziseren Auswertung bei der Erzeugung von Warnsignalen bzw. den Messungen des oder der Beschleunigungssensoren. Zum Beispiel kann die Messung der Temperatur, wie zum Beispiel mit einem Temperatursensor, in einem Beschleunigungssensor oder in einem Lichtleiter bzw. einer optischen Faser erfolgen.

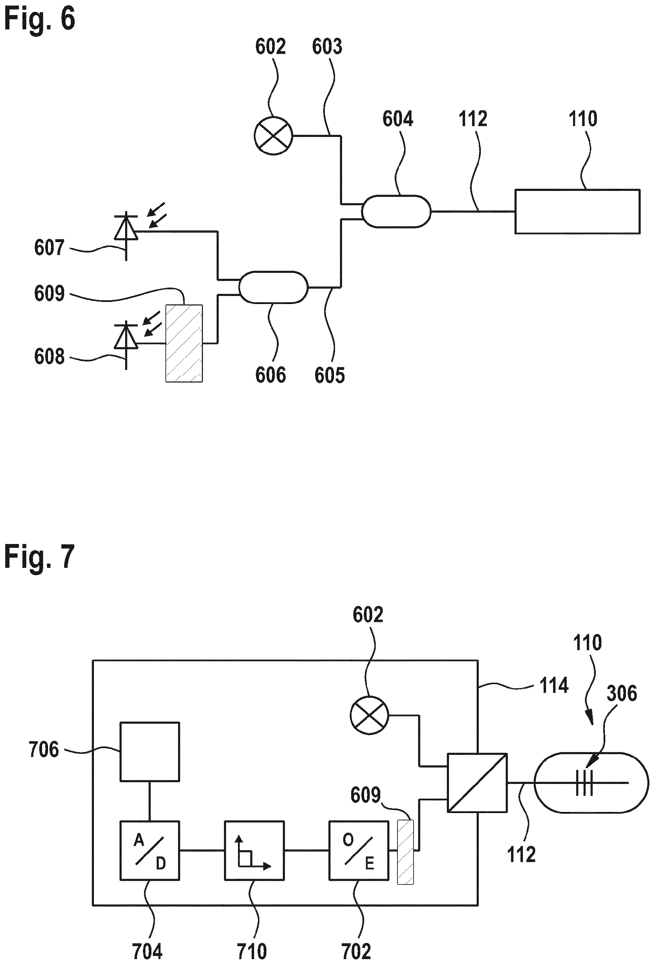

FIG. 6 zeigt ein typisches Messsystem zur Detektion einer Beschleunigung mit einer Vorrichtung zur Detektion einer Beschleunigung gemäß den hierin beschriebenen Ausführungsformen. Das System enthält einen oder mehrere Beschleunigungssensoren 110. Das System weist eine Quelle 602 für elektromagnetische Strahlung, zum Beispiel eine Primärlichtquelle, auf. Die Quelle dient zur Bereitstellung von optischer Strahlung mit welcher mindestens ein faseroptisches Sensorelement eines Beschleunigungssensors bestrahlt werden kann. Zu diesem Zweck ist eine optische Übertragungsfaser bzw. ein Lichtleiter 603 zwischen der Primärlichtquelle 602 und einem ersten Faserkoppler 604 bereitgestellt. Der Faserkoppler koppelt das Primärlicht in die optische Faser bzw. dem Lichtleiter 112 Die Quelle 602 kann zum Beispiel eine Breitbandlichtquelle, einen Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das faseroptische Sensorelement, wie zum Beispiel ein Faser-Bragg-Gitter (FBG) oder ein optischer Resonator, ist in eine Sensorfaser integriert bzw. an die Sensorfaser optisch angekoppelt. Das von den faseroptischen Sensorelementen zurückgeworfene Licht wird wiederum über den Faserkoppler 604 geleitet, welcher das Licht über die Übertragungsfaser 605 einen Strahlteiler 606 leitet. Der Strahlteiler 606 teilt das zurückgeworfene Licht zur Detektion mittels eines ersten Detektors 607 und eines zweiten Detektors 608. Hierbei wird das auf dem zweiten Detektor 608 detektierte Signal zunächst mit einem optischen Kantenfilter 609 gefiltert.

Durch den Kantenfilter 609 kann eine Verschiebung der Braggwellenlänge am FBG bzw. eine Wellenlängenänderung durch den optischen Resonator detektiert werden. Im Allgemeinen kann ein Messsystem, wie es in Figur 6 dargestellt ist, ohne den Strahlteiler 606 bzw. den Detektor 607 zur Verfügung gestellt sein. Der Detektor 607 ermöglicht jedoch eine Normierung des Messsignals des Beschleunigungssensors in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, oder andere Intensitätsschwankungen. Diese Normierung verbessert die Messgenauigkeit und reduziert die Abhängigkeit von Messsystemen von der Länge der zwischen der Auswerteeinheit und dem faseroptischen Sensor zur Verfügung gestellten Lichtleiter.

Insbesondere bei der Verwendung von mehreren FBGs können zusätzliche optische Filtereinrichtungen (nicht dargestellt) für die Filterung des optischen Signales bzw. Sekundärlichts verwendet werden. Eine optische Filtereinrichtung 609 bzw. zusätzliche optische Filtereinrichtungen können einen optischen Filter umfassen, der gewählt ist aus der Gruppe, welche besteht aus einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

Ein weiterer Aspekt bei der Überwachung von Windkraftanlagen, der mit anderen hier beschriebenen Ausführungsformen und Aspekten kombiniert werden kann, der jedoch auch unabhängig von weiteren Ausführungsformen, Aspekte und Details zur Verfügung gestellt ist, ist ein verbessertes Verfahren zur Überwachung einer Windkraftanlage mit einem faseroptischen Beschleunigungssensor. Gemäß einem solchen Aspekt bzw. einer solchen Ausführungsform wird ein Verfahren zur Überwachung einer Windkraftanlage zur Verfügung gestellt. Das Verfahren zur Überwachung einer Windkraftanlage umfasst das Messen einer Beschleunigung mit einem faseroptischen Beschleunigungssensor, wobei der Beschleunigungssensor an einer radialen Position im Bereich der äußeren 70% des Radius eines Rotorblatts der Windkraftanlage zur Verfügung gestellt ist und das Filtern eines Beschleunigungssignals des faseroptischen Beschleunigungssensors mit einem analogen Tiefpass-Filter bzw. einem analogen anti-aliasing Filter.

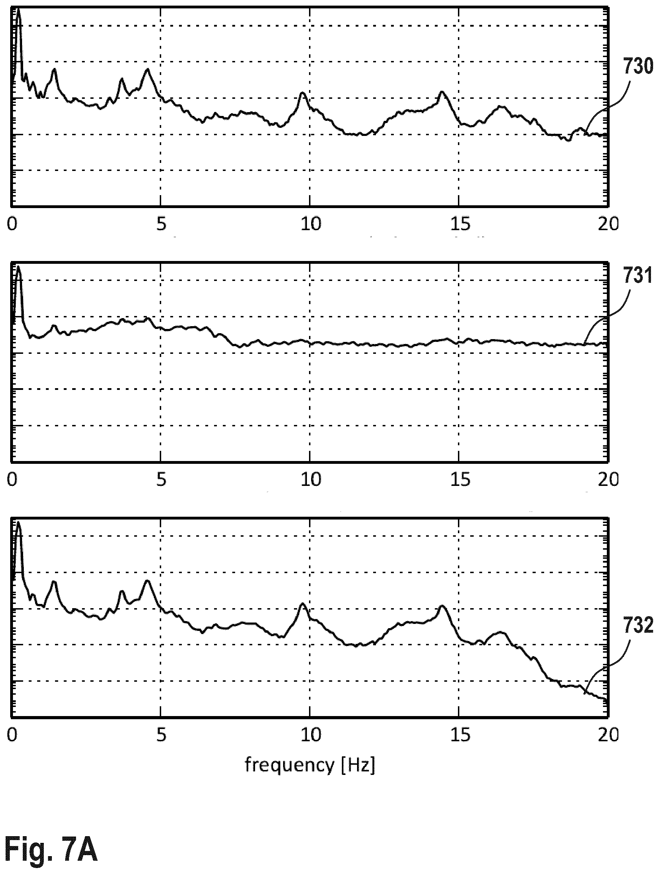

Figur 7 zeigt eine Auswerteeinheit 114, wobei ein Signal eines Faser-Bragg-Gitters 306 über einen Lichtleiter zur Auswerteeinheit geführt wird. In Figur 7 ist weiterhin eine Lichtquelle 602 dargestellt, die optional in der Auswerteeinheit zur Verfügung gestellt werden kann. Die Lichtquelle 602 kann aber auch unabhängig bzw. außerhalb von der Auswerteeinheit 114 zur Verfügung gestellt sein. Das optische Signal des faseroptischen Beschleunigungssensors 110 wird mit einem Detektor in ein elektrisches Signal gewandelt. Die Wandlung von einem optischen Signal zu einem elektrischen Signal ist durch das Symbol 702 in Figur 7 dargestellt. Das elektrische Signal wird mit einem analogen Anti-Aliasing-Filter 710 gefiltert. Im Anschluss an die analoge Filterung mit einem analogen Anti-Aliasing-Filter bzw. Tiefpassfilter wird das Signal durch einen Analog-Digital-Wandler 704 digitalisiert.

Gemäß einigen Ausführungsformen, die mit anderen Ausführungsformen kombiniert werden können, kann der Anti-Aliasing-Filter eine Grenzfrequenz von 1 kHz oder kleiner insbesondere von 500 Hz oder kleiner, weiterhin insbesondere von 100 Hz oder kleiner aufweisen. Gemäß hier beschriebenen Ausführungsformen, findet eine solche Filterung vor der Digitalisierung statt. Ferner findet für die hier beschriebenen Ausführungsformen keine spektrale Aufspaltung der Signale statt, wobei mit einem Spektrometer und einem Mehrkanaldetektor bereits eine optische Digitalisierung vorgenommen wird.

Gemäß hier beschriebenen Ausführungsformen findet eine analoge Tiefpassfilterung vor einer Digitalisierung eines Signals eines faseroptischen Beschleunigungssensors statt. Gemäß hier beschriebenen Ausführungsformen, die mit anderen Ausführungsformen kombiniert werden können, kann der Tiefpassfilter auch als ein analoger anti-aliasing Filter bezeichnet werden. Hierbei wird im Rahmen eines Abtasttheorems die Nyquist-Frequenz berücksichtigt, und eine Tiefpassfilterung mit Signalanteilen kleiner der Nyquist-Frequenz mittels des analogen Tiefpass-Filters bzw. analogen anti-aliasing Filters zur Verfügung gestellt.

Durch die hier beschriebenen Ausführungsformen mit einem faseroptischen Beschleunigungssensor und einer analogen Tiefpassfilterung kann eine verbesserte Messung einer Beschleunigung zur Überwachung einer Windkraftanlage zur Verfügung gestellt werden.

Figur 7 zeigt ferner eine digitale Auswerteeinheit 706, die zum Beispiel eine CPU, Speicher, und andere Elemente zur digitalen Datenverarbeitung beinhalten kann. Der Aspekt der verbesserten Messung mit faseroptischen Beschleunigungssensoren an Windkraftanlagen durch die Verwendung eines analogen Anti-Aliasing-Filters kann mit anderen Ausführungsformen, insbesondere in Bezug auf die Positionierung der Beschleunigungssensoren, der Verwendung der Signale zur Pitch-Regelung; die Anbringung von Beschleunigungssensoren bzw. Lichtleitern, faseroptische Beschleunigungssensoren, die für die Verwendung in Windkraftanlagen durch einen reduzierten Metallanteil verbessert sind, kombiniert werden.

Gemäß weiteren Ausführungsformen, kann die verbesserte Messung mit faseroptische Beschleunigungssensoren mit einer analogen Tiefpassfilterung vor einer Digitalisierung weiterhin vorteilhaft ausgestaltet werden, um eine digitale Auswertung in der digitalen Auswerteeinheit 706 zur Stochastic Subspace Identification (SSI) vorzunehmen. Hierbei können Eigenwerte des Rotorblatts, wobei die Eigenwerte insbesondere die Dämpfungen und die Frequenzen, d.h. die Eigenfrequenzen, eines Rotorblatts beinhalten können, berechnet werden.

Gemäß hier beschriebenen Ausführungsformen ist eine stehende bzw. trudelnde Windkraftanlage eine Windkraftanlage bei lastfreiem Drehen des Rotors. Zum Beispiel kann die Windkraftanlage ohne Zuschaltung des Generators mit zurückgepitchten Rotorblättern frei drehen. Beispielsweise kann dieser Zustand durch eine Rotationsfrequenz des Rotors von 0,1 Hz oder weniger beschrieben werden.

Gemäß weiteren Ausführungsformen, kann die Messung mit einem faseroptischen Beschleunigungssensor mit einer Temperaturmessung kombiniert werden. Die Temperatur beeinflusst die Eigenschaften des Rotorblatts. Somit kann die Temperaturmessung bei der Erkennung von Eisbildung und/oder Auswertung der Eigenwerte hinzugezogen werden. Zum Beispiel haben die Eigenwerte typischerweise eine funktionale Abhängigkeit von der Temperatur. Eine Abweichung bzw. Änderung der Eigenwerte kann somit relativ zu dem zu erwartenden Eigenwert bei einer vorgegebenen Temperatur ermittelt werden. Gemäß noch weiteren Ausführungsformen, die mit hier beschriebenen Ausführungsformen kombiniert werden können, kann eine Berücksichtigung einer Größe ausgewählt aus der Gruppe bestehend aus: Rotorposition, Temperatur, Pitch-Winkel, Yaw- Beschleunigung, und Rotationsrate des Rotors, bei der Auswertung zur Verfügung gestellt werden.

Wie in Bezug auf Figur 7 erläutert, kann ein Verfahren zur Überwachung einer Windkraftanlage mittels eines faseroptischen Beschleunigungssensors verbessert werden, indem Ausführungsformen einen analogen Tiefpassfilter bzw. einen analogen Anti-aliasing-filter verwenden. Gemäß entsprechenden Ausführungsformen, kann ein Rotor Windkraftanlage zur Verfügung gestellt werden. Der Rotor beinhaltet zumindest ein Rotorblatt. Ein faseroptischer Beschleunigungssensor ist an einer radialen Position im Bereich der äußeren 70 % des Radius des Rotorblatts zur Verfügung gestellt. Ein analoger Tiefpassfilter bzw. Anti-Aliasing-Filter ist ausgebildet zum Filtern des Beschleunigungssignals des faseroptischen Beschleunigungssensors, insbesondere zum analogen Filtern eines elektrischen Signals, das aus dem faseroptischen Beschleunigungssignal generiert wurde. Zum Beispiel beinhaltet der Rotor eine Auswerteeinheit 114, die in einer Nabe 44 zur Verfügung gestellt ist. Die Auswerteeinheit 114 kann einen Wandler zum Wandeln des optischen Signals in ein elektrisches Signal beinhalten. Zum Beispiel kann eine Fotodiode, ein Photomultiplier (PM) oder ein anderer opto-elektronischer Detektor als Wandler verwendet werden. Die Auswerteeinheit beinhaltet ferner einen Anti-Aliasing-Filter 710, der zum Beispiel mit dem Ausgang des Wandlers bzw. des opto-elektronischen Detektors verbunden ist. Die Auswerte Inhalt kann ferner einen Analog-digital-Wandler 704 beinhalten, der mit dem Ausgang des Anti-Aliasing-Filters 710 verbunden ist. Die Auswerteeinheit 114 kann darüber hinaus eine digitale Auswerteeinheit 706 beinhalten, die zur Auswertung der digitalisierten Signale eingerichtet ist. Weitere Ausgestaltungen des Rotors bzw. der Rotorblätter können gemäß der hier beschriebenen Ausführungsformen in Bezug auf die faseroptischen Beschleunigungssensoren, die Positionierung von faseroptischen Beschleunigungssensoren, und/oder die Signalübertragung mit Lichtleiter zur Verfügung gestellt werden.

Figur 7A zeigt unterschiedliche Beschleunigungssignale zur weiteren Erläuterung der hier beschriebenen Ausführungsformen. Dabei zeigt der obere Graph (730) in Figur 7A eine reale Beschleunigung in einem Rotorblatt bzw. ein Referenzsignal, das zu Versuchszwecken mit einem Referenzsensor ermittelt wurde. Es ist die Power-Spectral-Density (PSD) über der Frequenz aufgetragen, um zum Beispiel die hier beschriebenen Eigenwerte zur Ermitteln. Der mittlere Graph (731) zeigt das Beschleunigungssignal eines faseroptischen Beschleunigungssensors, wobei das Beschleunigungssignal dem Referenzsignal entspricht. Der mittlere Graph wurde ohne die Abfolge des opto-elektronisches Wandelns des Beschleunigungssignals des faseroptischen Beschleunigungssensors und einem Filtern des opto-elektronisch gewandelten Beschleunigungssignals mit einem analogen Anti-aliasing-Filter erzeugt. Der untere Graph in Figur 7A zeigt das Beschleunigungssignal eines faseroptischen Beschleunigungssensors, wobei das Beschleunigungssignal dem Referenzsignal entspricht. Der untere Graph wurde mit der Abfolge des opto-elektronisches Wandelns des Beschleunigungssignals des faseroptischen Beschleunigungssensors und einem Filtern des opto-elektronisch gewandelten Beschleunigungssignals mit einem analogen Anti-aliasing-Filter erzeugt. Es ist deutlich zu erkennen, dass für den unteren Graph (732) eine verbesserte Erkennung von Eigenwerten insbesondere in einem Frequenzbereich von 0,3 Hz bis 20 Hz im Vergleich zum mittleren Graph (731) existiert. Gemäß hier beschriebenen Ausführungsformen kann folglich eine verbesserte Messung von optischen Beschleunigungssignalen erzielt werden. Gemäß weiteren Ausführungsformen, die mit hier beschriebenen Ausführungsformen kombiniert werden können kann das Filtern des opto-elektronisch gewandelten Beschleunigungssignals mit einem analogen Anti-aliasing-Filter eine Grenzfrequenz von 10 Hz bis 40 Hz hat, insbesondere von 15 Hz bis 25 Hz haben.

Gemäß hier beschriebenen Ausführungsformen kann in einem Rotorblatt eine Beschleunigung optisch gemessen werden. Hierbei wird eine Anti-Aliasing-Filterung durchgeführt, insbesondere eine analoge Anti-Aliasingfilterung. Im Gegensatz zu anderen üblichen Mitteln der optischen Signalerkennung mittels Spektrometer oder dem auslesen mittels eines Scanning-Lasers, kann gemäß hier beschriebenen Ausführungsformen eine Beschleunigung in einem Rotorblatt optisch gemessen werden. Es wird ein Aliasing-Effekt verhindert, im Gegensatz zu einer Glättung der Messwerte, wobei bei der Glättung der Messwerte lediglich ein besseres Regelsignal erzeugt wird. Die Anti-Aliasing-Filterung wird in den hier beschriebenen Ausführungen analog durchgeführt, d.h. es wird zum Beispiel eine Umsetzung des optischen Beschleunigungssignals in ein analoges elektrisches Messsignal verwendet, bevor eine analoge Anti-Aliasing-Filterung zur Verfügung gestellt wird. Das analoge elektrische Messsignal wird analog Tiefpass-gefiltert, wobei mindestens die halbe Nyquist Frequenz als Grenzwert verwendet wird.

Gemäß weiteren hier beschriebenen Ausführungsformen, wird das mit einem analogen Anti-Aliasing-Filter gefilterte Signal mittels SSI (Stochastic Subspace Identification, Statistische Zeitbereichs-Systemidentifikationsverfahren) ausgewertet. Hiermit können auch frequenzabhängige Eigenschaften von Rotorblättern, zum Beispiel Alterung, Schädigung, etc., erkannt werden.

Zum Beispiel können hierbei ein oder mehrere Eigenwerte mit zumindest einer gemessen Größe aus der Gruppe bestehend aus: einer Temperatur an einem Rotorblatt der Windkraftanlage, einer Windgeschwindigkeit, einer Leistung der Windkraftanlage, einer Rotationsrate eines Rotors der Windkraftanlage, und einem Pitchwinkel eines Rotorblatts, kompensiert werden. Eine Kompensation kann zum Beispiel anhand der folgenden Verfahren zur Kalibrierung durchgeführt werden.

Eine Beschleunigung in einem Rotorblatt wird zum Beispiel mit einem hier beschriebenen faseroptischen Beschleunigungssensor gemessen. Dies kann in einem ersten Zeitintervall, zum Beispiel einem kurzen Zeitintervall von z.B. 5 - 30 Minuten erfolgen. Ferner können einer oder mehrere der zu kompensierenden Parameter gemessen werden. Diese Parameter können sein: eine Rotorblatttemperatur, ein Pitchwinkel, eine Windgeschwindigkeit, eine Leistung der Windkraftanlage (z.B. die erzeugte oder die ans Netz abgegebene Leistung), und/oder eine Rotationsrate des Rotors. Insbesondere kann die Temperatur des Rotorblatts als Einflussgröße auf die Eigenwerte des Rotorblatts gemessen werden. Die Eigenwerte des Rotorblatts können aus den Beschleunigungsdaten mittels SSI in dem ersten Zeitintervall ermittelt werden. Die Eigenwerte mit zugehörigem Parametersatz aus einem oder mehreren der zu kompensierenden Parameter können abgespeichert werden. Die oben beschriebene Messung mit der Bestimmung der Eigenwerte kann mehrfach wiederholt werden bis ein Datensatz erhalten ist, der einen Teil oder einen Großteil des Parameterraums beim Betrieb der jeweiligen Windkraftanlage repräsentiert. Dieser zweite Zeitraum kann sich zum Beispiel über mehrere Wochen erstrecken. Nach Ermittlung von Werten in einem Teil des Parameterraums kann das Verhaltens der Eigenwerte über dem Parameterraum bestimmt werden, zum Beispiel durch anfitten eines geeigneten Modells (Lineares Modell, Taylor Approximation, Lookup Tabelle). Die Koeffizienten des Kompensationsmodells bzw. die Lookup-Tabelle können in einer Recheneinheit auf der Windenergieanlage gespeichert werden. Es kann somit eine Kalibrierung der Eigenwerte in Abhängigkeit von einem oder mehreren Parametern erfolgen.

Gemäß weiteren Ausführungsformen kann nach der Kalibrierung eine Messung mit kompensierten bzw. kalibrierten Parametern durchgeführt werden. Es können die Eigenwerte eines Rotorblatts mithilfe einer Beschleunigungsmessung, zum Beispiel mit einem faseroptischen Beschleunigungssensor, ermittelt werden. Diese können mithilfe des Kalibrierungsmodells umgerechnet werden bzw. die Parameter, die während der Beschleunigungsmessung ermittelt werden, können für eine Kompensation der Eigenwerte herangezogen werden. Basierend auf den kompensierten Eigenwerten kann eine Abweichung der kompensierten Eigenwerte bestimmt werden. Zum Beispiel kann mittels einem oder mehrerer Schwellwerte die Ausgabe eines Warnsignals zur Verfügung gestellt werden. Alternativ können auch mehrere Schwellenwerte innerhalb des Parameterraums zur Verfügung gestellt werden, sodass die Ausgabe eines Warnsignals anhand der Eigenwerte im Parameterraum erfolgt, d.h. ohne vorherige Umrechnung der Eigenwerte.

Der Beschleunigungssensor 110, der in den Figuren 8A und 8B näher erläutert wird, beinhaltet eine Testmasse, deren Beschleunigung im Sensor gemessen wird. Gemäß typischen Ausführungsformen können verwendete Dehnungssensoren und/oder verwendete Beschleunigungssensoren faseroptische Sensoren sein. Hierbei wird die Dehnung bzw. die Beschleunigung der Testmasse durch Faser-Bragg-Gitter in einer Faser optisch gemessen. Durch die Verwendung dieser Sensoren kann die oben beschriebene Messgenauigkeit zur Verfügung gestellt werden. Ferner bieten diese Sensoren vorteilhafte Eigenschaften zur Verwendung in Windkraftanlagen.

Die in den hier beschriebenen Anordnung und Verfahren verwendeten Beschleunigungssensoren 110 werden nun in Bezug auf Figur 8A und 8B beschrieben. Figur 8A zeigt einen Beschleunigungssensor 110 wobei eine Testmasse 812 an einer optischen Faser 822 angebracht ist. Ein Gehäuse 802 ist derart ausgestaltet, dass bei einer Beschleunigung der Masse 812 eine Dehnung, d.h. eine relative Längenänderung (Verlängerung oder Verkürzung) der optischen Faser 822 eintritt. Durch die Dehnung der Faser 822 wird das Faser-Bragg-Gitter 824 verändert. Dies führt zu einer veränderten Reflexion bzw. Transmission des Faser-Bragg- Gitters in Bezug auf die reflektierten bzw. transportierten Wellenlängen. Diese Änderung kann als Maß für die Dehnung der Faser und somit indirekt als Maß für die Beschleunigung der Testmasse 812 verwendet werden. In Figur 8B ist ein Beschleunigungssensor 110 dargestellt. Diese Anordnung kombiniert 3 der in Figur 8A gezeigten Sensoren, wobei die Rotation der Sensoren in Illustration eine dreidimensionale Anordnung darstellen soll, so dass 3 Beschleunigungswerte in einem Koordinatensystem, wie zum Beispiel einem kartesischen Koordinatensystem, gemessen werden.

Die Verwendung der Sensoren 110 bzw. deren Anordnung zueinander und das Zusammenspiel der Auswerteeinheit 114 zur Überwachung eines Zustandes eines Rotorblatts werden unter Bezugnahme auf die Figuren 2 und 5 näher erläutert. Figur 2 zeigt einen Teil einer Windkraftanlage 200. Auf einem Turm 40 ist eine Gondel 42 angeordnet. An einer Rotornabe 44 sind Rotorblätter 100 angeordnet, so dass der Rotor (mit der Rotornabe und den Rotorblättern) in einer durch die Linie 852 dargestellten Ebene rotiert. Typischerweise ist diese Ebene relativ zu der Senkrechten geneigt. Figur 5 zeigt eine Vorderansicht der Rotorblätter 100 und der Rotornabe 44 in Richtung der Rotationsachse, wobei Koordinaten x und y im blattfesten Koordinationssystem, die Gravitationskraft bzw. Gravitationsbeschleunigung g, sowie der Sensor 110 dargestellt sind.

Bei einer Rotation des Rotors der Windenergieanlage misst der Beschleunigungssensor 110 unter anderem die Gravitationsbeschleunigung. Diese Gravitationsbeschleunigung wird im Koordinatensystem gemäß Figur 5 in y-Richtung und in x-Richtung gemessen. Durch die Neigung des Rotors, die in Figur 2 dargestellt ist, wird im Koordinatensystem in Figur 5 auch in z-Richtung die Gravitationsbeschleunigung zu einem gewissen Maß einem Signal überlagert sein. Das Messsignal, welches typischerweise in der in Figur 5 eingezeichneten y-Richtung gemessen wird, ist dem Gravitationssignal überlagert. Durch Bereinigung des Messsignals vom Gravitationssignal erhält man ein bereinigtes Signal.

Die Steuerungen und/oder Regelungen moderner Windkraftanlagen beinhalten typischerweise eine sogenannte Pitch-Regelung, wobei das Rotorblatt um eine Längsachse des Rotorblatts gedreht wird. Demzufolge ändert sich in einem blattfesten Koordinationssystem die in Figur 5 dargestellte y-Richtung während einer Rotation des Rotorblatts 100 um die Längsachse des Rotorblatts. Bei der Betrachtung der von einem Beschleunigungssensor 110 gemessenen Beschleunigung, die den Einfluss der Gravitationsbeschleunigung auf eine Testmasse beinhaltet, bedarf es zur verbesserten Bewertung der Signale einer Betrachtung der verschiedenen Koordinatensysteme. Zum einen existiert ein blattfestes Koordinatensystem. Bei einer Rotation des Rotorblatts um die Längsachse des Rotorblatts rotieren das Koordinatensystem sowie der Sensor 110. Darüber hinaus existiert ein Koordinatensystem welches fest in Bezug auf die Rotornabe 44 ist. Dabei handelt es sich um ein rotierendes Koordinatensystem, welches unabhängig von einer Pitch-Regelung verwendet werden kann. Ferner existiert ein ortsfestes Koordinatensystem, welches fest in Bezug auf die Windenergieanlage 200 und somit fest in Bezug auf die Gravitationskraft bzw. Gravitationsbeschleunigung ist.

Gemäß typischen Ausführungsformen wird zur Korrektur des oder der Signale des Beschleunigungssensors und/oder der Dehnungssensoren, d.h. eines Signals in x-, y-und z-Richtung im blattfesten Koordinatensystem, eine Transformation in das ortsfeste Koordinatensystem durchgeführt, wobei die Rotation des Rotors, der Pitch-Winkel des Rotorblatts sowie die Neigung des Rotors, berücksichtigt werden. Im ortsfesten Koordinatensystem kann das Signal von der Gravitationsbeschleunigung bereinigt werden. Anschließend kann eine Rücktransformation in das Koordinatensystem, welches fest in Bezug auf die Rotornabe ist, durchgeführt werden. In diesem Koordinatensystem, welches fest in Bezug auf die Rotornabe ist, wird typischerweise eine Beschleunigung im Wesentlichen parallel zur Windrichtung oder im Wesentlichen parallel zur Rotationsachse des Rotors ermittelt.

Gemäß einigen hier beschriebenen Ausführungsformen, wird ein Beschleunigungssensor in den äußeren 70 % des Radius eines Rotorblatts insbesondere in einem Bereich von 60 bis 90 % des Radius des Rotorblatts zur Verfügung gestellt. Dabei kann zum Beispiel durch die Verwendung eines faseroptischen Beschleunigungssensors, wie zum Beispiel eines faseroptischen Beschleunigungssensors, eine optische Signalübertragung erfolgen. Die optische Signalübertragung reduziert das Risiko eines Blitzschadens. Durch die optische Signalübertragung kann eine bisher in der Praxis existierende Limitierung, Sensoren möglichst nahe an dem Blattflansch zur Verfügung zu stellen überwunden werden.

Die Verringerung des Risikos eines Blitzeinschlags bzw. eines Blitzschadens kann weiter dadurch reduziert werden, einen metallfreien bzw. einen im Wesentlichen metallfreien Beschleunigungssensor zur Verfügung zu stellen. Gemäß einer Ausführungsform, wird ein Verfahren zur Überwachung einer Windkraftanlage zur Verfügung gestellt. Das Verfahren beinhaltet das messen einer Beschleunigung mit einem faseroptischen Beschleunigungssensor, wobei der Beschleunigungssensoren einer radialen Position im Bereich der äußeren 70 % des Radius des Rotorblatts zur Verfügung gestellt ist, wobei der Beschleunigungssensoren zu weniger als 10 Gew.-% aus Metall besteht oder weniger als 20 g Metall enthält.

Gemäß einer weiteren Ausführungsform wird ein Rotorblatt einer Windkraftanlage zur Verfügung gestellt. Das Rotorblatt beinhaltet einen faseroptischen Beschleunigungssensoren, wobei der faseroptische Beschleunigungssensor an einer radialen Position im Bereich der äußeren 70% des Radius des Rotorblatts zur Verfügung gestellt ist, und wobei der Beschleunigungssensor zu weniger als 10 Gew.-% aus Metall besteht oder weniger als 20 g Metall enthält. Zum Beispiel kann ein Lichtleiter von dem faseroptischen Beschleunigungssensor bis zu einer radialen Rotorblattposition geführt ist, an der das Rotorblatt begehbar ist. Gemäß noch weiteren Ausführungsformen, die mit anderen Ausführungsformen kombiniert werden können, kann der faseroptische Beschleunigungssensoren eine maximale Ausdehnung von 10 mm in einem Querschnitt senkrecht zu einer Erstreckung des Lichtleiter haben.

Gemäß hier beschriebenen Ausführungsformen können Beschleunigungssensoren mit ausreichen wenig Metall oder metallfreien Beschleunigungssensoren zur Verfügung gestellt werden. Somit können zusätzlich zu existierenden Ideen einer kabellosen Signalübertragung, d.h. einer Signalübertragung ohne elektrische Kabel in einem Rotorblatt, metallfreie Beschleunigungssensoren zur Verfügung gestellt werden, die ein reduziertes Risiko eines Blitzschadens zur Verfügung stellen. Durch ein blitzsicheres Design bzw. ein Design mit reduziertem Risiko eines Blitzschadens oder Blitzeinschlags kann die erforderliche hohe Zuverlässigkeits- und Lebensdaueranforderung an Windkraftanlagen erfüllt werden.

Zum Beispiel können für eine vorteilhafte Anbringung in der Blattspitze geringe Abmessungen und/oder Massen des Sensors vorteilhaft sein. Für die faseroptische Messung mittels Faser-Bragg-Gitter sind aber relative große Massen notwendig, da die Faser relativ steif ist. Hierbei kann ein Membransensor mittels Fabry Perot Interferometer zu noch weiteren Verbesserungen führen.

Neben faseroptischen Beschleunigungssensoren, die ebenfalls im wesentlichen metallfrei zur Verfügung gestellt werden können, da die eigentliche Sensorik durch ein Faser-Bragg-Gitter zur Verfügung gestellt ist, kann gemäß einer Ausführungsform ein faseroptischer Beschleunigungssensoren wie folgt zur Verfügung gestellt werden. Der faseroptische Beschleunigungssensor beinhaltet einen Lichtleiter bzw. eine optische Faser mit einer Lichtaustrittsfläche. Ferner beinhaltet der faseroptische Beschleunigungssensor eine Membran und eine mit der Membran in Verbindung stehende Masse. Hierbei kann die Masse entweder zusätzlich zur Masse der Membran zur Verfügung gestellt werden oder die Membran kann mit einer geeigneten ausreichend großen Masse ausgestaltet sein. Der faseroptische Beschleunigungssensor beinhaltet einen optischen Resonator, der zwischen der Lichtaustrittsfläche und der Membran ausgebildet ist. Zum Beispiel kann der Resonator ein Fabry-Perot-Resonator sein. Ferner beinhaltet der faseroptische Beschleunigungssensoren einen Spiegel, der im Strahlengang zwischen der Lichtaustrittsfläche und der Membran zur Verfügung gestellt ist, wobei der Spiegel in einem Winkel von 30° bis 60° relativ zu einer optischen Achse des Lichtleiter bzw. der optischen Faser ausgebildet ist. Zum Beispiel kann der Spiegel in einem Winkel von 45° ausgebildet sein.

Die Figuren 9A und 9B zeigen einen faseroptischen Beschleunigungssensor 910. Ein primäres optisches Signal wird über einen Lichtleiter 112 dem Beschleunigungssensor 910 zugeführt. Zum Beispiel kann der Lichtleiter mit einem Substrat 912 verbunden werden. Das Substrat 912 kann aus einem Nicht-metallischen Material bestehen. Auf dem Substrat 912 bzw. an dem Substrat 912 ist eine Membran 914 ausgebildet. Das aus dem Lichtleiter 112 austretende primäre optische Signal wird über einen Spiegel 916 in Richtung der Membran 912 gelenkt. Gemäß typischen Ausführungsformen, die mit anderen Ausführungsformen kombiniert werden können, kann der Spiegel 916 als eine im Substrat ausgeformte Fläche zur Verfügung gestellt werden. Zum Beispiel kann das Substrat aus einem Material bestehen, dass in einem vorgegebenen Wellenlängenbereich, typischerweise dem Wellenlängenbereich des primären optischen Signals, reflektiert. Der Spiegel kann relativ zur Achse des Lichtleiters einen Winkel im Bereich von 30° bis 60°, zum Beispiel einen Winkel von 45°, haben.

Das primäre optische Signal wird wie durch den Pfeil 901 angedeutet durch den Spiegel 916 umgelenkt und auf die Membran gerichtet. An der Membran findet eine Reflexion des primären optischen Signals statt. Das reflektierte Licht wird wie durch den Pfeil 903 dargestellt zurück in die optische Faser bzw. den Lichtleiter 112 gekoppelt. Somit wird zwischen der Lichtaustrittsfläche für den Austritt des primären optischen Signals und der Membran ein optischer Resonator 930 ausgebildet. Hierbei ist zu berücksichtigen, dass im Allgemeinen die Lichtaustrittsfläche des primären optischen Signals gleich der Lichteintrittsfläche für das reflektierte sekundäre Signal ist. Der optische Resonator kann somit als Fabry-Perot-Resonator ausgebildet sein. Für einen faseroptischen Beschleunigungssensor gemäß hier beschriebenen Ausführungsformen kann eine Masse 922 an der Membran 914 zur Verfügung gestellt sein. Alternativ kann die Masse der Membran selbst als Masse für die Detektion einer Beschleunigung dienen. Bei einer Beschleunigung wird die Membran 914 durch die Trägheit der Masse 922 ausgelenkt. Dies führt zu einem optisch messbaren Signal in dem optischen Resonator 930. Gemäß hier beschriebenen Ausführungsformen, ist der faseroptische Beschleunigungssensor ausgestaltet, um eine Beschleunigung mit einer Richtungskomponente zum Messen, die eine Richtungskomponente senkrecht zur Achse der Faser bzw. des Lichtleiter 112 ist. Durch die Richtungskomponente senkrecht zur Achse des Lichtleiter 112, kann der faseroptische Beschleunigungssensoren 912 für Verfahren zur Überwachung von Rotorblättern eingesetzt werden, bzw. in Rotorblätter von Windkraftanlagen bzw. Windkraftanlagen eingebaut werden, um eine Überwachung zu ermöglichen.

Gemäß hier beschriebenen Ausführungsformen, die mit anderen Ausführungsformen kombiniert werden können, ist ein faseroptischer Beschleunigungssensor, d.h. zum Beispiel ein extrinsischer faseroptischer Beschleunigungssensor mit einem mittels der Faser oder angrenzend an die Faser zur Verfügung gestellten optischen Sensor, zum Beispiel mit einem optischen Resonator, oder ein intrinsischer faseroptische Beschleunigungssensor mit einem innerhalb der Faser zur Verfügung gestellten Sensor, an einer radialen Position der äußeren 70 % des Radius des Rotorblatts zur Verfügung gestellt. Dies entspricht in manchen Fällen einem radialen Bereich des Rotorblatts, an dem es nicht möglich ist das Rotorblatt im fertigen Zustand zu begehen. Somit kann gemäß weiteren Ausführungsformen, die hier beschriebene radiale Position der Beschleunigungssensoren auch durch eine radiale Position, an der das Rotorblatt im fertigen Zustand nicht begehbar ist, beschrieben werden. Insbesondere kann der Beschleunigungssensoren in den äußeren 50 % des Radius des Rotorblatts bzw. den äußeren 60 bis 90 % des Radius des Rotorblatts zur Verfügung gestellt werden. Durch die im Wesentlichen metallfreie Ausgestaltung des faseroptischen Beschleunigungssensors kann die Gefahr eines Blitzanschlages ausreichend reduziert werden, um einen Beschleunigungssensor an einer solchen radialen Position auch in der Praxis zu verwenden. Durch die nach außen verlagerte radiale Position des Beschleunigungssensors kann eine Empfindlichkeit des Beschleunigungssensors erzielt werden, die eine Vielzahl von Überwachungen, Zustandsbestimmungen, und Steuerungsmöglichkeiten und/oder Regelungsmöglichkeiten erlaubt.

Die in den Figuren 9A und 9B dargestellten Komponenten des extrinsischen faseroptischen Beschleunigungssensors können gemäß beispielhaften Ausführungsformen aus folgenden Materialien bestehen. Der Lichtleiter 112, kann zum Beispiel eine Glasfaser, eine optische Faser oder ein Lichtwellenleiter sein, wobei Materialien wie optische Polymere, Polymethylmethacrylat, Polycarbonat, Quarzglas, Ethylen-Tetrafluorethylen verwendet werden können, die gegebenenfalls dotiert sind. Das Substrat 912 bzw. der darin ausgestaltete Spiegel 916 kann zum Beispiel aus Silizium bestehen. Die Membran kann aus einem Kunststoff oder einem Halbleiter zur Verfügung gestellt werden, der geeignet ist, als dünne Membran ausgebildet zu werden. Die Masse 922 kann aus jedem nichtmetallischen Material zur Verfügung gestellt werden, wobei insbesondere Materialien mit einer hohen Dichte geeignet sind. Durch eine hohe Dichte kann die Abmessung der Masse reduziert werden.

Um einen faseroptischen Beschleunigungssensor, wie er zum Beispiel in den Figuren 9A und 9B dargestellt ist, besonders einfach an einem Rotorblatt, insbesondere in einem äußeren radialen Bereich, zur Verfügung zu stellen, ist es von Vorteil, wenn der faseroptische Beschleunigungssensoren in einem Querschnitt senkrecht zum Lichtleiter 112 in Figur 9A bzw. 9B eine geringe Abmessungen aufweist. Zum Beispiel kann eine maximale Abmessung in einem Querschnitt senkrecht zur Achse des Lichtleiter 112 10 mm oder weniger betragen. Durch die Ausgestaltung, wie Sie in Bezug auf die Figuren 9A und 9B dargestellt ist, kann eine solche Dimensionierung einfach realisiert werden.

Der in den Figuren 9A und 9B beschriebene faseroptische Beschleunigungssensor 910 kann durch eine weitere Modifikation zu einem unabhängigen weiteren Aspekt ausgebildet werden, der insbesondere in Verfahren zur Überwachung von Rotorblättern von Windkraftanlagen und in Rotorblättern von Windkraftanlagen angewendet werden kann. Bei einer Verringerung bzw. einem Entfallen der Masse 922 kann die Membran 914 sowohl zur Messung eines statischen Drucks verwendet werden als auch zur Messung eines Schalldruckpegel. Für die Messung eines statischen Drucks ist der Bereich des optischen Resonators 930 vom Umgebungsdruck getrennt, so dass bei einer Änderung des Umgebungsdrucks, eine Bewegung der Membran stattfindet. Für die Messung eines Schalldruckpegel, ist die Membran ausgestaltet um bei einem entsprechenden Schalldruck eine Bewegung, insbesondere eine oszillierende Bewegung auszuführen, die über den optischen Resonator in ein optisches Signal übertragen wird. Hierbei ist es für die Verwendung in Rotorblättern von Windkraftanlagen bzw. für die Verfahren zur Überwachung von Windkraftanlagen besonders günstig, das der Schalldruck in einer Richtung senkrecht zur Längserstreckung des Lichtleiters 112 gemessen wird.

Gemäß hier beschriebenen Ausführungsformen, werden unterschiedliche Verfahren zur Überwachung und/oder Steuerung (bzw. Regelung) von Windkraftanlagen zur Verfügung gestellt. Ferner werden gemäß hier beschriebenen Ausführungsformen verbesserte Beschleunigungssensoren, insbesondere intrinsische oder extrinsische faseroptische Beschleunigungssensoren, zur Verfügung gestellt. Hierbei sind intrinsische faseroptische Beschleunigungssensoren, Sensoren mit einer innerhalb der Faser zur Verfügung gestellten Sensoreinheit, wie zum Beispiel einem Faser-Bragg-Gitter. Extrinsische faseroptische Beschleunigungssensoren, haben eine mittels der Faser oder an der Faser zur Verfügung gestellten optischen Sensor. Somit können auch extrinsische faseroptische Beschleunigungssensoren mittels einer optischen Faser und einem optischen Sensor, d.h. einem nicht elektrischen Sensor, einen Beschleunigung ohne elektrische Komponenten messen. Hierbei können Beschleunigungssensoren zum Beispiel an einer radialen Position im Bereich der äußeren 70 % des Radius des Rotorblatts zur Verfügung gestellt werden, insbesondere im Bereich der äußeren 50 % des Radius des Rotorblatts, wie zum Beispiel im Bereich von 60 % bis 95 % des Radius, wobei 0 % dem Flansch an der Blattwurzel entspricht. Weitere Ausgestaltungen zur Anbringung, Positionierung und zur Führung der Beschleunigungssignale vom Beschleunigungssensor zur Blattwurzel werden im Folgenden beschrieben. Diese Ausgestaltungen zur Anbringung, Positionierung und zur Führung der Beschleunigungssignale vom Beschleunigungssensor zur Blattwurzel können für alle hier beschriebenen Ausführungsformen vorteilhaft verwendet werden.

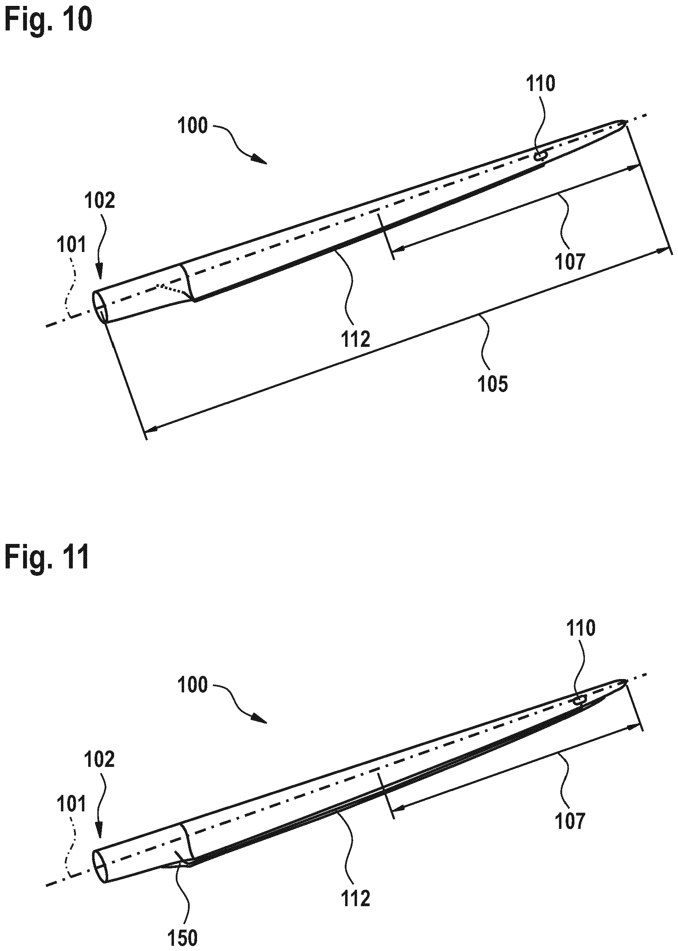

Figur 10 zeigt ein Rotorblatt 100. Das Rotorblatt erstreckt sich entlang seiner Länge 105, die dem Radius des Rotorblatts entspricht, von dem Blattflansch 102 zu der Blattspitze. Ein Beschleunigungssensor 110 ist an einer radialen Position im Bereich 107 zur Verfügung gestellt. Der Beschleunigungssensor kann zum Beispiel ein faseroptischer Beschleunigungssensor 110 sein. Eine Signalleitung von dem Beschleunigungssensor 110 zu der Blattwurzel wird entlang der Hinterkante des Rotorblatts geführt. Zum Beispiel kann die Signalleitung ein Lichtleiter 112 sein. Gemäß hier beschriebenen Ausführungsformen kann die Signalleitung innerhalb des Rotorblatts entlang der Hinterkante, zum Beispiel bei einem neu produzierten Rotorblatt, oder außerhalb des Rotorblatts entlang der Hinterkante, zum Beispiel in einem an der Hinterkante angebrachten Profil, zur Verfügung gestellt werden.

Ausführungsformen der vorliegenden Erfindung erlauben es, Beschleunigungssensoren, insbesondere faseroptische Beschleunigungssensoren bzw. faseroptische Beschleunigungssensoren, nahe der Blattspitze, d.h. in hier beschriebenen radial äußeren Bereichen, in denen ein Rotorblatt nicht begehbar ist, einzusetzen, nachzurüsten und/oder im Reparaturfall entsprechende Wartungsmaßnahmen ergreifen zu können. Somit ergibt sich gemäß der hier vorliegenden Offenbarung eine detaillierte technische Lehre zur Ausführung und/oder zur Verfahrensweise für eine Messung der Beschleunigung in den hier beschriebenen radial außenliegenden Bereichen eines Rotorblatts. Diese technische Lehre bezieht sich zum einen auf die Montage, die Führung von Lichtleitern, redundante Verwendung von Komponente, und/oder eine Nachrüstung entsprechender Sensoren, zum anderen - alternative oder zusätzlich - zum anderen auf eine Messwerterfassung mittels eines analogen Anti-Aliasing-Filters bzw. einer SSI Auswertung der hier beschriebenen Beschleunigungssensoren. Somit wird über die rein theoretische Verwendung solcher Sensoren in radial außen liegenden Bereichen eines Rotorblatts hinaus, eine technische Lehre zur Verfügung gestellt, die einen praktischen Einsatz von faseroptischen Beschleunigungssensoren in einem radialen Bereich eines Rotorblatts, an dem das Rotorblatt nicht begehbar ist (zum Beispiel die äußeren 70%, insbesondere die äußeren 50%, weiterhin insbesondere die äußeren 30% des Radius), ermöglichen. Somit erlauben hier beschrieben Ausführungsformen durch die beschriebenen Anti-Aliasing-Filter eine gute Verwendung von Messsignalen. Darüber hinaus können alternativ oder zusätzlich die entsprechenden Komponenten technisch auch derart zur Verfügung gestellt werden, dass die verbesserten Regelungsstrategien bzw. Messstrategien auch über einen ausreichend lange Lebensdauer von zum Beispiel mehr als 20 Jahren zur Verfügung gestellt werden können. Ausführungsformen erlauben zum Beispiel Reparatur- und Austauschmöglichkeiten, ohne die ein Einsatz von Beschleunigungssensoren nicht praktikabel ist.

Im Bereich der Blattwurzel ist durch die gepunktete Linie illustriert, dass gemäß hier beschriebenen Ausführungsformen bei einer Kabelverlegung an der Hinterkante des Rotorblatts ein Durchstich in das Innere des Rotorblatts an einer radialen Position zur Verfügung gestellt wird, an der das Rotorblatt begehbar ist. Dies kann in der Nähe der Blattwurzel bzw. an der Blattwurzel sein. Es kann aber auch in einem anderen radialen Bereich des Rotorblatts sein, an dem das Rotorblatt begehbar ist.

Bei der Herstellung von neuen Rotorblättern kann im Rahmen der Fertigung eine Verlegung des Signalkabels, wie zum Beispiel des Lichtleiters 112, im Inneren des Rotorblatts, insbesondere im Hinterkasten des Rotorblatts vorgenommen werden. Weiterhin kann der Sensor ebenfalls im Inneren des Rotorblatts montiert werden. Insbesondere kann der Sensor in einer abgetrennten Kammer zur Verfügung gestellt werden. Dies ermöglicht einen Schutz gegen lose Klebstoffreste und andere Verunreinigungen. Ein Signalkabel wie zum Beispiel ein Lichtleiter kann jedoch auch entlang der Hinterkante geführt werden, wobei ein Durchstich ins Innere des Rotorblatts bevorzugterweise in einem begehbaren Bereich des Rotorblatts erfolgt. Diese Position des Durchstichs erlaubt vereinfachte Wartungsmaßnahmen. Zum Beispiel kann in einem Reparaturfall eines Beschleunigungssensors, die Signalleitung bzw. der Lichtleiter an einem Stecker, der nahe am Durchstich zur Verfügung gestellt sein kann, getrennt werden. Eine als Ersatz zur Verfügung gestellte Signalleitung, zum Beispiel ein Ersatz-Lichtleiter, bzw. ein als Ersatz zur Verfügung gestellter Beschleunigungssensor können in einem solchen Fall außen verlegt werden. Die ursprüngliche Signalleitung bzw. der ursprüngliche Sensor können hierbei aufgegeben werden.

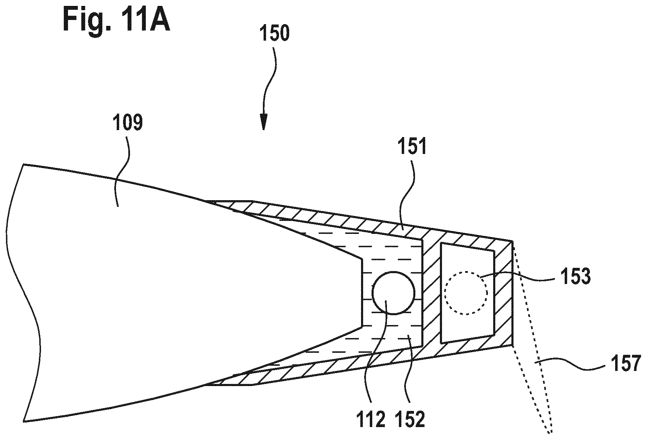

Gemäß weiteren Ausführungsformen, die mit anderen Ausführungsformen kombiniert werden können ist bei einer Nachrüstung eines Sensors, zum Beispiel zur Eiserkennung, der Lichtleiter 112 ebenfalls außen verlegt. Für ein Nachrüsten eines Sensors und/oder für eine nachträgliche Anbringung eines Lichtleiters, kann gemäß hier beschriebener Ausführungsformen ein separates Profil zur Verfügung gestellt werden. Figur 11 zeigt ein weiteres Rotorblatt 100. Hierbei ist an der Hinterkante des Rotorblatts ein Profil 150 zur Verfügung gestellt, so dass der Lichtleiter 112 in dem Profil geführt werden kann. Gemäß hier beschriebenen Ausführungsformen, die mit anderen Ausführungsformen kombiniert werden können, hat das Profil eine Befestigungsvorrichtung für den Lichtleiter 112 bzw. ein entsprechendes Signalkabel, insbesondere ein optisches Signalkabel.

Das Profil 150 kann zum Beispiel ein pultrudiertes Profil sein. Das Profil kann weiterhin an die Hinterkante eines Rotorblatts angepasst sein. Es hat zum Beispiel eine Längserstreckung, die zumindest 10 % oder zumindest 30 % des Radius des Rotorblatts entspricht. Weiterhin kann das Profil durch segmentierte Elemente zur Verfügung gestellt werden. Zum Beispiel können sich mehrere segmentierte Elemente entlang zumindest 30 % des Radius des Rotorblatts erstrecken. Gemäß manchen Ausführungsformen, die mit anderen Ausführungsformen kombiniert werden können, kann das Profil entlang seiner Länge eine gleichbleibende Geometrie aufweisen. Es kann ebenfalls eine Geometrie haben, die für verschiedene Hinterkantendicken ausgebildet ist. Weiterhin kann das Profil optional derart ausgestaltet sein, um eine aerodynamische Verbesserungen des Rotorblatts zu bewirken.

Wie in Figur 11A gezeigt, kann das Profil 150 an der Hinterkante 109 des Rotorblatts zur Verfügung gestellt werden. Zum Beispiel kann das Profil mit einem Befestigungselement 151 an der Hinterkante angebracht werden. Das Profil kann mittels eines Klebers 152 an der Hinterkante zur Verfügung gestellt werden. Gemäß einigen Ausführungsformen kann der Lichtleiter 112 in dem Kleber zur Verfügung gestellt werden, zum Beispiel eingebettet sein. Der Lichtleiter 112 verläuft entlang der Hinterkante 109 des Rotorblatts in dem Profil 150.

Gemäß weiteren Ausführungsformen kann das Profil einen Leerkanal 153 aufweisen, um im Rahmen einer Wartung oder Reparatur einen Ersatzlichtleiter zur Verfügung zu stellen. Gemäß noch weiteren alternativen oder zusätzlichen Ausgestaltungen kann das Profil 150 eine Struktur 157 zur aerodynamischen Strömungsbeeinflussung beinhalten. Diese kann zum Beispiel eine Gurney-Flap sein. Die Struktur 157 ist in Figur 11A gestrichelt dargestellt.

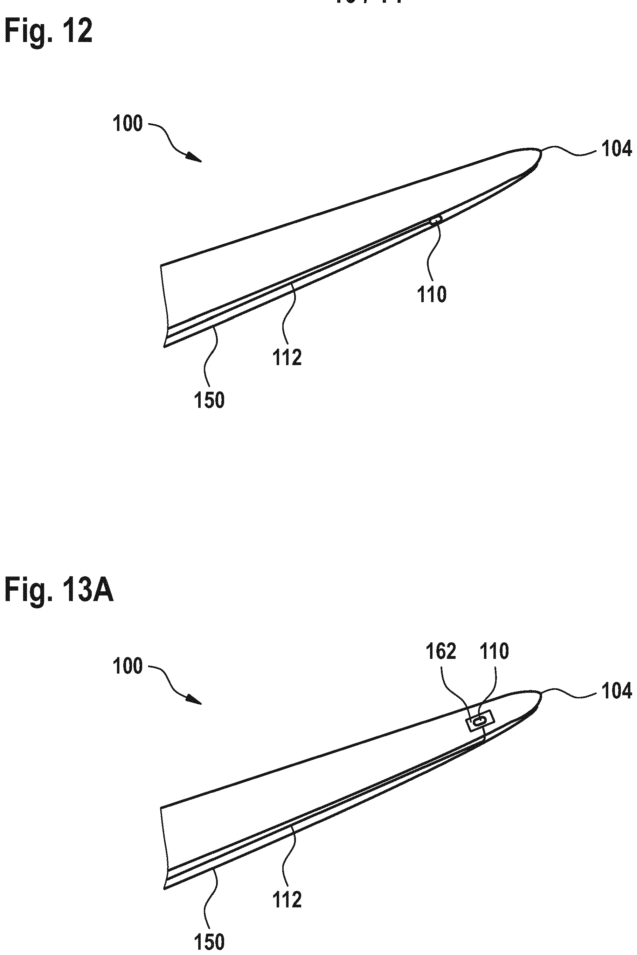

Figur 12 zeigt eine weitere optionale Ausgestaltung, die mit anderen Ausführungsformen kombiniert werden kann. Hierbei hat das Profil 150, das an der Hinterkante des Rotorblatts 100 zur Verfügung gestellt werden kann, eine weitere Befestigungsvorrichtung für einen Beschleunigungssensor 110. Der Beschleunigungssensor 110 kann in dem Profil 150 zur Verfügung gestellt sein. Dies erlaubt ein besonders einfaches Nachrüsten eines Beschleunigungssensors und der entsprechenden optischen Signalübertragung in dem nachrüstbaren Profil an der Hinterkante des Rotorblatts.

Gemäß einem hier beschriebenen Aspekt wird ein Profil für die Hinterkante eines Rotorblatts einer Windkraftanlage zur Verfügung gestellt. Das Profil beinhaltet zumindest eine Befestigungsvorrichtung für einen Lichtleiter. Typischerweise ist das Profil ausgestaltet, um sich entlang zumindest 30 % des Radius des Rotorblatts erstrecken. Gemäß weiteren Ausführungsformen, die mit anderen Ausführungsformen kombiniert werden können, kann die zumindest eine Befestigungsvorrichtung eine oder mehrere Klebestellen sein. Zum Beispiel kann ein Lichtleiter in das Profil eingeklebt werden. Gemäß weiteren Ausführungsformen, kann als Befestigungsvorrichtung eine Klemmvorrichtung für einen Lichtleiter oder ein Leerkanal zur Verfügung gestellt sein, durch den ein Lichtleiter hindurchgeführt werden kann.

Gemäß noch weiteren Ausführungsformen, die mit anderen hier beschriebenen Ausführungsformen kombiniert werden können, kann das Profil eine weitere Befestigungsvorrichtung für eine Beschleunigungssensor beinhalten. Die weitere Befestigungsvorrichtung kann als Klemmvorrichtung, Gewinde oder Schraube, und/oder durch ein oder mehrere Klebestellen zur Verfügung gestellt sein. Insbesondere Klemmvorrichtungen, Gewinde bzw. Schrauben sind bevorzugt aus einem nicht-metallische Material ausgebildet. Durch ein Profil gemäß hier beschriebenen Ausführungsformen, kann ein Nachrüsten für ein Rotorblatt mit einem Beschleunigungssensor und einer entsprechenden optischen Signalübertragung besonders einfach zur Verfügung gestellt werden. Weiterhin kann durch die Verwendung von nicht-metallischen Materialien das Risiko eines Blitzschadens bzw. eines Blitzeinschlags reduziert werden.

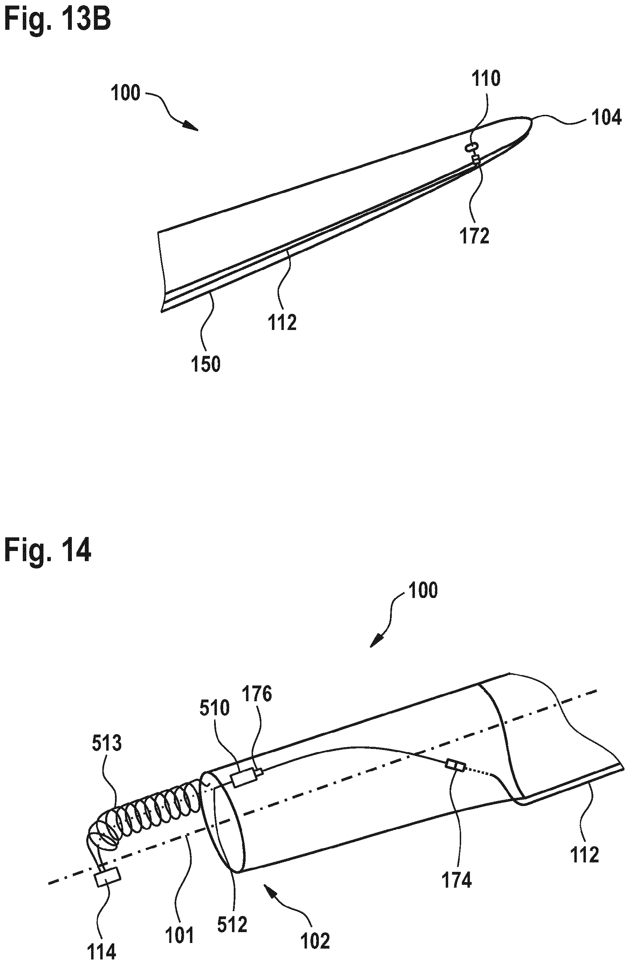

Figur 13A zeigt eine weitere Ausführungsform, die mit anderen hier beschriebenen Ausführungsformen kombiniert werden kann. Der Beschleunigungssensor 110 ist in einer Kammer 162 zur Verfügung gestellt. Der Lichtleiter 112 wird an der Hinterkante aus dem Rotorblatt 100 geführt. Der Lichtleiter 112 wird in dem Profil 150 entlang der Hinterkante in Richtung der Blattwurzel bzw. des Blattflanschs geführt. Als weitere zusätzliche Option, wie Sie in Figur 13B dargestellt ist, kann in einem Bereich des Übergangs zwischen dem Rotorblatt 100 und dem Profil 150 eine Steckverbindung 172 zur Verfügung gestellt werden. Dies erlaubt einen einfachen Austausch des Lichtleiters 112, falls dieser im Rahmen von Wartungsarbeiten gewechselt werden sollte.

In Bezug auf das Nachrüsten, die Wartung bzw. den Austausch von Komponenten sei vermerkt, dass faseroptische Beschleunigungssensoren, insbesondere faseroptische Beschleunigungssensoren einen relativ geringen Wartungsaufwand haben bzw. relativ robust sind. Für die Verwendung an Windkraftanlagen sollte jedoch berücksichtigt werden, dass die Betriebsbedingungen durch große Temperaturschwankungen und/oder große Beschleunigungen, die auf die Komponenten einwirken, insbesondere auch möglicherweise existierende Vibrationen, extrem sind. Somit ist bei der Verwendung in Windkraftanlagen eine Redundanz von Komponenten bzw. die vereinfachte Möglichkeit zum Austausch von Komponenten, insbesondere vorteilhaft.

Figur 14 illustriert die Kabelverlegung, zum Beispiel die Verlegung des Lichtleiters 112, in einem der Blattwurzel zugewandten radialen Bereich des Rotorblatts. Dies Details, Ausgestaltungen, und Ausführungsformen der Kabelverlegung können mit anderen Ausführungsformen kombiniert werden. Der Lichtleiter 112 ist entlang der Hinterkante des Rotorblatts 100 geführt. Dies kann zum Beispiel wie oben beschrieben in einem Profil ermöglicht werden. Es wird ein Durchstich in das Innere des Rotorblatts zur Verfügung gestellt. Insbesondere kann die radiale Position des Durchstichs derart festgelegt sein, dass das Rotorblatt an der radialen Position des Durchstichs begehbar ist. Gemäß weiteren optionalen Ausgestaltungen, kann im Bereich des Durchstichs, zum Beispiel direkt am Durchstich bzw. nahe des Durchstichs im Inneren des Rotorblatts, eine weitere Steckverbindung 174 zur Verfügung gestellt werden. Ein Lichtleiter bzw. eine optische Faser führt von der Steckverbindung 174 zu einem Stecker 176 an einem Verteiler 510, zum Beispiel einem Feldverteiler. Ein weiterer Lichtleiter 512 führt von dem Verteiler 510 zu der Auswerteeinheit 114. Zum Beispiel kann die Auswerteeinheit 114 in der Nabe des Rotors zur Verfügung gestellt werden. Gemäß typischen Ausführungsformen, wie Sie mit anderen Ausführungsformen kombiniert werden können, kann der Lichtleiter 512 derart entlang einer Spirale (Feder) oder durch eine Spirale 513 geführt werden, das eine Rotation des Rotorblatts 100 um seine Längsachse, zum Beispiel beim Pitchen, nicht zu einer Beschädigung des Lichtleiter 512 führt. Zur besseren Übersicht ist der Lichtleiter 512 in Figur 14 gestrichelt durch die Feder bzw. Spirale gekennzeichnet. Eine verbesserte Entlastung des Lichtleiters kann dadurch gegeben werden, dass gemäß Ausführungsformen, die mit anderen Ausführungsformen kombiniert werden können, der Lichtleiter parallel zur Spirale 513 geführt wird (durch die gestrichelte Linie symbolisiert bzw. nicht explizit dargestellt).

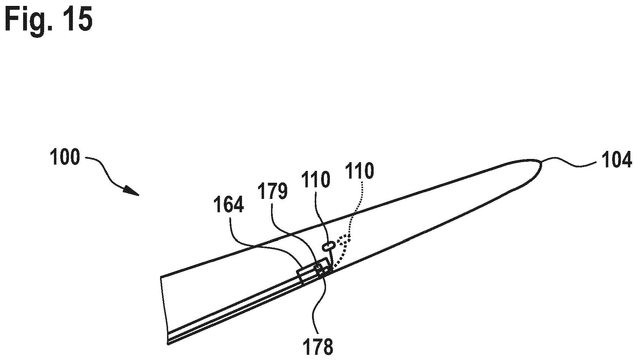

Figur 15 zeigt exemplarisch eine weitere Ausgestaltung für die Verwendung von einem Beschleunigungssensor 110 in einem Rotorblatt 100. Der Beschleunigungssensor 110 ist in einem Bereich nahe der Blattspitze 104 zur Verfügung gestellt. Weiterhin sind im Inneren des Rotorblatts 100 zwei Lichtleiter in Richtung der Blattwurzel bzw. in Richtung des Blattflanschs geführt. In einer weiteren Kammer 164, die im Rahmen von Wartungsarbeiten geöffnet werden kann, existiert eine erste Steckverbindung 178 und ein weiterer Stecker 179. Durch die Verwendung von zwei Lichtleitern kann eine Redundanz zur Verfügung gestellt werden. Beim Ausfall eines Lichtleiter kann die Kammer 164 geöffnet werden und die Steckverbindung 178 des Beschleunigungssensor 110 gelöst werden, um im Anschluss den Beschleunigungssensor 110 an den Stecker 179 zu stecken. Wie durch den alternativ oder zusätzlich zur Verfügung gestellten zweiten Beschleunigungssensor 110 (gestrichelt dargestellt) illustriert, kann eine zusätzliche oder alternative Redundanz auch in Bezug auf den Beschleunigungssensor zur Verfügung gestellt werden. Es kann zusätzlich oder alternativ der Ausfall eines Beschleunigungssensors durch ein Umstecken behoben werden.

Gemäß noch weiteren Ausführungsformen, die mit anderen Ausführungsformen kombiniert werden können, kann für eine Reparatur eines Lichtleiter ein im Inneren verlegter Lichtleiter aufgegeben werden und durch einen in einem Profil zur Verfügung gestellten Lichtleiter ersetzt werden. Weiterhin ist es möglich ein in einem Profil zur Verfügung gestellten Lichtleiter im Rahmen einer Reparatur aufzugeben und einen weiteren Lichtleiter mit einem weiteren Profil auf das erste Profil zu montieren. Gemäß noch weiteren Ausführungsformen, kann sowohl innerhalb eines Rotorblatts und/oder innerhalb eines Profils ein Leerkanal zur Verfügung gestellt sein. In einem Leerkanal kann ein Lichtleiter nachträglich eingeführt werden. Dies kann insbesondere vorteilhaft mit einer Steckverbindung 174, wie Sie in Figur 14 dargestellt ist, kombiniert werden.

Die Verwendung eines Leerkanals in einem Profil bzw. auch im Inneren eines Rotorblatts kann ferner mit Ausführungsformen von Beschleunigungssensoren, die wie oben beschrieben eine geringe maximale Abmessung in einem Querschnitt senkrecht zur Lichtleiter-Achse vorteilhaft sein. Für faseroptische Beschleunigungssensoren mit kleinen Abmessungen im Querschnitt senkrecht zum Lichtleiter-Achse kann ein Ersatz-Lichtleiter gegebenenfalls auch mit einem Ersatz-Beschleunigungssensor in den Leerkanal eingebracht werden.

Gemäß hier beschriebenen Ausführungsformen ist eine Mehrzahl an Verwendungsmöglichkeiten von Beschleunigungssensoren, insbesondere faseroptischen Beschleunigungssensoren, wie zum Beispiel faseroptische Beschleunigungssensoren, in Windkraftanlagen beschrieben, wobei Ausgestaltungen durch die radiale Positionierung, den Aufbau von faseroptischen Beschleunigungssensoren, sowie die Anbringung von Beschleunigungssensoren und/oder Anbringung von Lichtleitern zur Verfügung gestellt sind.

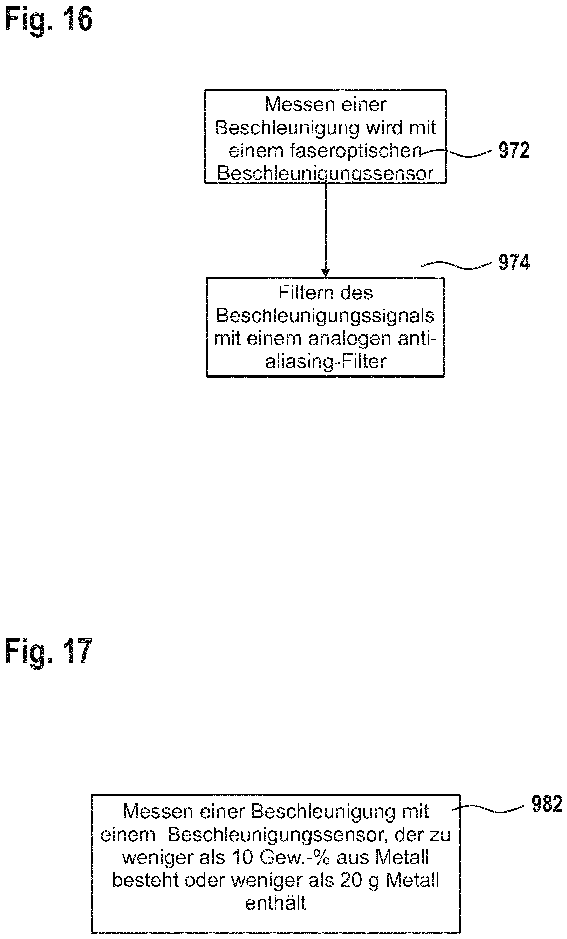

Gemäß einer weiteren Ausführungsform ist ein Verfahren zur Überwachung einer Windkraftanlage zur Verfügung gestellt. Ein entsprechendes Ablaufdiagramm ist in Figur 16 dargestellt. Eine Beschleunigung wird mit einem faseroptischen Beschleunigungssensor gemessen (siehe Bezugszeichen 972), wobei der Beschleunigungssensor an einer radialen Position im Bereich der äußeren 70% des Radius eines Rotorblatts der Windkraftanlage zur Verfügung gestellt ist. Ferner wird das Beschleunigungssignals des faseroptischen Beschleunigungssensors mit einem analogen anti-aliasing-Filter gefiltert (siehe Bezugszeichen 974).

Gemäß einer noch weiteren Ausführungsform ist ein Verfahren zur Überwachung einer Windkraftanlage zur Verfügung gestellt. Ein entsprechendes Ablaufdiagramm ist in Figur 17 dargestellt. Eine Beschleunigung wird mit einem faseroptischen Beschleunigungssensor gemessen (siehe Bezugszeichen 982), wobei der Beschleunigungssensor an einer radialen Position im Bereich der äußeren 70% des Radius des Rotorblatts zur Verfügung gestellt ist, wobei der Beschleunigungssensor zu weniger als 10 Gew.-% aus Metall besteht oder weniger als 20 g Metall enthält.

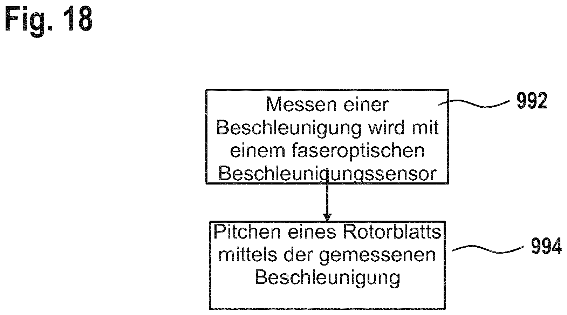

Gemäß einer noch weiteren Ausführungsform ist ein Verfahren zur individuellen Pitchregelung von Rotorblättern einer Windkraftanlage zur Verfügung gestellt. Ein entsprechendes Ablaufdiagramm ist in Figur 18 dargestellt. Das Verfahren beinhaltet messen (siehe Bezugszeichen 992) einer Beschleunigung mit einem Beschleunigungssensor, wobei der Beschleunigungssensor in einem ersten Rotorblatt zur Verfügung gestellt ist, zum Beispiel an einer Position im Bereich der äußeren 70% des Radius. Ferner beinhaltet das Verfahren ein Pitchen (siehe Bezugszeichen 994) des ersten Rotorblatts der Windkraftanlage mittels der gemessenen Beschleunigung, wobei das Pitchen im Rahmen einer individuellen Pitchregelung erfolgt. Das Verfahren beinhaltet ferner ein Hochpassfiltern eines Signals des Beschleunigungssensors zur Ermittlung einer zeitveränderlichen Größe, wobei das Pitchen des ersten Rotorblatts der Windkraftanlage mittels der zeitveränderlichen Größe erfolgt.

Gemäß den hier beschriebenen Ausführungsformen wird aus dem Beschleunigungssignal eine zeitveränderliche, hochpassgefilterte Größe ermittelt, die unmittelbar für die individuelle Pitchregelung verwendet wird. Komplizierte Auswerteverfahren bzw. komplizierte Messmethoden einer Mehrzahl unterschiedlicher Größen können hierdurch entfallen. Für einen Regler werden nur zeitveränderliche, hochpassgefilterte Größen verwendet. Diese können gemäß hier beschriebenen Ausführungsformen besonders einfach aus den Beschleunigungssignalen direkt bestimmt werden. Diese zeitveränderlichen Größen haben den Vorteil, dass sie auch bei Verwendung von faseroptischen Beschleunigungssignalen, die ans sich einen Drift unterliegen können, stabiler sind, keine Kalibrierung benötigen bzw. die Sensoren für die Messung technisch einfach sind. Hierbei kann unter anderem auf komplizierte Integrationsschritte, etc. verzichtet werden. Gemäß manchen Ausführungsformen, die mit anderen hier beschriebenen Ausführungsformen kombiniert werden können, kann das Hochpassfiltern durch Bildung einer zeitlichen Ableitung, durch Hochpassfilterung, und/oder mittels einer Fouriertransformation durchgeführt werden. Es ist hierbei anzumerken, dass eine zeitliche Ableitung, insbesondere bei der Wahl geeigneter Koeffizienten einer Hochpassfilterung bzw. einer Unterdrückung von Änderungen mit geringen Frequenzen relativ zu Signaländerungen mit hohen Frequenzen entspricht. Ein Hochpass kann signaltechnisch folglich als Differenzierglied betrachtet werden bzw. eine zeitliche Differenzierung kann als Hochpass betrachtet werden. Somit Zum Beispiel kann das Hochpassfiltern eine Grenzfrequenz für Signalanteile mit Frequenzen größer der Rotationsfrequenz des Rotors haben. Die Grenzfrequenz kann von 0,3 bis 0,5 Hz sein, insbesondere wobei das Hochpassfiltern eine Unterdrückung eines Signals von 0,2 Hz relativ zu einem Signal von 0,6 von mindestens einem Faktor 5 hat.

Insbesondere bei einer Kombination mit einem faseroptischen Beschleunigungssensor kann das Verfahren weiterhin ein opto-elektronisches Wandeln des Signals des faseroptischen Beschleunigungssensors und ein Filtern des opto-elektronisch gewandelten Beschleunigungssignals mit einem analogen Anti-aliasing-Filter beinhalten. Somit wird für die individuelle Pitchregelung ein Signal verwendet, das zum einen hochpassgefiltert ist und darüber hinaus einer analogen Anti-aliasing-Filterung unterzogen wurde. Weitere zeitveränderliche Größen werden somit für eine individuelle Pitchregelung nicht benötigt, auch wenn diese optional einer Regelgröße hinzugefügt werden könnten. Gemäß typischen Ausführungsformen, die mit anderen hier beschriebenen Ausführungsformen kombiniert werden können, kann das Filtern des opto-elektronisch gewandelten Beschleunigungssignals mit dem analogen Anti-aliasing-Filter eine Grenzfrequenz von 10 Hz bis 40 Hz hat, insbesondere von 15 Hz bis 25 Hz haben.

Verfahren zur individuellen Pitchregelung sind basierend auf einer Mehrzahl unterschiedlicher Steuer- oder Messgrößen bekannt. Durch die Verwendung von Beschleunigungssensoren in einem Rotorblatt, wobei der Beschleunigungssensor an einer radialen Position im Bereich der äußeren 70 % des Radius zur Verfügung gestellt ist, kann mit einem Beschleunigungssensor ein für eine individuelle Pitchregelung bestens geeignetes Signal verwendet werden. Bei der Verwendung des Signals eines Beschleunigungssensors, der in einem radial äußeren Bereich des Rotorblatts zur Verfügung gestellt ist, kann durch die Empfindlichkeit der Beschleunigungssensoren in diesem radialen Bereich eine verbesserte Pitchregelung erzielt werden. Hierbei kann durch die Messung einer Beschleunigung in jeweils einem Rotorblatt, für jedes Rotorblatt eine individuelle Pitchregelung erfolgen.

Gemäß hier beschriebenen Ausführungsformen wird unter einer individuellen Pitchregelung eine Regelung verstanden, bei der jedes Rotorblatt einen eigenen Antrieb zur Pitchregelung hat. Zum Beispiel zeigt Figur 5 jeweils einen Antrieb 570, der mit einer Steuerung 50 der Windkraftanlage verbunden ist, so dass jeweils ein Antrieb 570 das Rotorblatt um eine Achse 501 drehen kann, um den Anstellwinkel des Rotorblatts zu variieren, d.h. das Rotorblatt zu pitchen. Bei der individuellen Pitchregelung kann jeder Antrieb 570 ein eigenes Signal für die Pitchregelung erhalten, das nicht notwendigerweise identisch zu den Signalen der anderen Antriebe für die anderen Rotorblätter sein muss. Es ist offensichtlich, dass auch bei einer individuellen Pitchregelung alle Rotorblätter mit einem identischen Pitch-Signal angesteuert werden können. Eine individuelle Pitchregelung zeichnet sich jedoch dadurch aus, dass sie Abweichungen zwischen Rotorblättern bei der Pitchregelung ermöglicht.

Eine individuelle Pitchregelung kann insbesondere bei Ausführungsformen zur Verfügung gestellt werden, bei denen sich ein Beschleunigungssensor in den äußeren 50 % des Radius des Rotorblatts, weiterhin insbesondere in einem Bereich von 60 % bis 90 % des Radius Rotorblatts befindet. Wie in Figur 5 dargestellt ist in einem Rotorblatt 101 Beschleunigungssensor 110 zur Verfügung gestellt. Zum Beispiel kann der Beschleunigungssensor ein faseroptischer Beschleunigungssensor oder ein faseroptische Beschleunigungssensor sein. Das optische Signal wird über eine Lichtleiter 112 zu einer Auswerteeinheit 114 geführt. Zum Beispiel kann das optische Signal über einen Verteiler 510 zu der Auswerteeinheit 114 geführt werden. Die Auswerteeinheit 114 ist mit der Steuerung 50 der Windkraftanlage verbunden. Basierend auf den Signalen der Beschleunigungssensoren 110 kann eine individuelle Ansteuerung der Antriebe 570 für jedes der Rotorblätter 100 zur Verfügung gestellt werden. Es wird eine zeitveränderliche Größe, die direkt aus dem Beschleunigungssignal bestimmt wird, verwendet. Eine Bestimmung der zeitveränderlichen Größe direkt aus dem Beschleunigungssignal ist als Verzicht auf Integrationsschritte etc. bzw. als eine Reduktion von Integrationsschritten etc. zu verstehen.

Gemäß weiteren Ausführungsformen, können insbesondere mehrere Beschleunigungssensoren an einem Rotorblatt an mehreren radialen Positionen verwendet werden.

Im Hinblick auf die individuelle Pitchregelung mit Beschleunigungssensoren, ist gemäß einer Ausführungsform einer Windkraftanlage zur Verfügung gestellt.

Die Windkraftanlage beinhaltet ein erstes Rotorblatt, das an einer Nabe montiert ist, einen ersten Antrieb zu Rotation des ersten Rotorblatts für eine Pitchregelung des ersten Rotorblatts, zumindest ein zweites Rotorblatt das an der Nabe montiert ist, zumindest einen zweiten Antrieb zu Rotation des zweiten Rotorblatts für eine Pitchregelung des zweiten Rotorblatts, wobei der zweite Antrieb unabhängig vom ersten Antrieb an steuerbar ist, und eine Steuerung zum Ansteuern von zumindest dem ersten Antrieb. Die Windkraftanlage beinhaltet ferner einen Beschleunigungssensor wobei der Beschleunigungssensor an einer radialen Position im Bereich der äußeren 70 % des Radius des ersten Rotorblatts zur Verfügung gestellt ist, und eine Messsignalleitung zum Führen des Messsignals des Beschleunigungssensor zu der Steuerung und/oder Regelung, wobei die Steuerung und/oder Regelung konfiguriert ist ein Pitchen des ersten Rotorblatts mittels einer ermittelten zeitveränderlichen Größe zu steuern.

In solchen Ausführungsformen von Windkraftanlagen kann der Beschleunigungssensor insbesondere in den äußeren 50 % des Radius des Rotorblatts, weiterhin insbesondere in einem Bereich von 60 % bis 90 % des Radius des Rotorblatts zur Verfügung gestellt sein. Hierbei ist es insbesondere vorteilhaft, wenn der Beschleunigungssensor zu weniger als 10 Gew.-% aus Metall besteht oder weniger als 20 g Metall enthält. Ein solcher Beschleunigungssensor kann insbesondere der faseroptische Beschleunigungssensor gemäß einer der Ausführungsformen sein, wie sie in Bezug auf die Figuren 9A und 9B beschrieben sind. Weiterhin kann der Beschleunigungssensor bzw. ein Lichtleiter zur Signalübertragung des Signals des Beschleunigungssensors gemäß einer der Ausführungsformen zur Verfügung gestellt werden, wie sie im Hinblick auf die Figuren 10 bis 15 beschrieben sind.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

**Patentansprüche**

1.  Verfahren zur individuellen Pitchregelung von Rotorblättern (100) einer Windkraftanlage (200), umfassend:

Messen einer Beschleunigung mit einem faseroptischen Beschleunigungssensor (110) in einem Rotorblatt (100) der Windkraftanlage (200); opto-elektronisches Wandeln (702) eines Signals des faseroptischen Beschleunigungssensors (110); Filtern des opto-elektronisch gewandelten Beschleunigungssignals mit einem analogen Anti-aliasing-Filter (710); Hochpassfiltern des Signals des faseroptischen Beschleunigungssensors (110) zur Ermittlung einer zeitveränderlichen Größe, und Pitchen des Rotorblatts (100) der Windkraftanlage (200) mittels der zeitveränderlichen Größe, wobei das Pitchen im Rahmen einer individuellen Pitchregelung erfolgt.

2.  Verfahren gemäß Anspruch 1, wobei der faseroptische Beschleunigungssensor (110) an einer radialen Position im Bereich der äußeren 70% des Radius eines ersten Rotorblatts (100) zur Verfügung gestellt ist, insbesondere wobei der Beschleunigungssensor in den äußeren 50% des Radius des Rotorblatts, weiterhin insbesondere in einem Bereich von 60% bis 90% des Radius des Rotorblatts zur Verfügung gestellt ist.

3.  Verfahren gemäß einem der Ansprüche 1 bis 2, wobei das Hochpassfiltern durch Bildung einer zeitlichen Ableitung, durch Hochpassfilterung, und/oder mittels einer Fouriertransformation durchgeführt wird.

4.  Verfahren gemäß einem der Ansprüche 1 bis 3, wobei das Hochpassfiltern eine Grenzfrequenz von 0,3 bis 0,5 Hz hat, insbesondere wobei das Hochpassfiltern eine Unterdrückung eines Signals von 0,2 Hz relativ zu einem Signal von 0,6 von mindestens einem Faktor 5 hat.

5.  Verfahren gemäß einem der Ansprüche 1 bis 4, wobei das Filtern des opto-elektronisch gewandelten Beschleunigungssignals mit dem analogen Anti-aliasing-Filter (710) eine Grenzfrequenz von 10 Hz bis 40 Hz hat, insbesondere von 15 Hz bis 25 Hz hat.

6.  Verfahren gemäß einem der Ansprüche 1 bis 5, wobei das Signal des faseroptischen Beschleunigungssensors (110) mit einem Lichtleiter (112) zur Nabe (44) geführt wird, wobei der Lichtleiter (112) an der Hinterkante (109) des Rotorblatts (100) zur Verfügung gestellt ist.

7.  Verfahren gemäß Anspruch 6, wobei der Lichtleiter (112) an einem an einer Hinterkante (109) des Rotorblatts (100) zur Verfügung gestellten Profil (150) zur Verfügung gestellt ist.

8.  Verfahren gemäß Anspruch 7, wobei das Profil (150) ein pultrudiertes Profil ist und/oder wobei das Profil (150) eine aerodynamische Beeinflussung des Rotorblatts (100) bewirkt.

9.  Verfahren gemäß einem der Ansprüche 7 bis 8, wobei sich das Profil (150) entlang zumindest 10% oder zumindest 30% des Radius des Rotorblatts (100) erstreckt, insbesondere wobei sich ein oder mehrere Segmente des Profils entlang zumindest 10% oder zumindest 30 % des Radius des Rotorblatts erstrecken.

10. Verfahren gemäß einem der Ansprüche 6 bis 9, wobei der Lichtleiter (112) an einer radialen Position, an der das Rotorblatt (100) begehbar ist, von außen in das Innere des Rotorblatts geführt wird.

11. Eine Windkraftanlage (200), umfassend:

ein erstes Rotorblatt (100), das an einer Nabe (44) montiert ist;
einen ersten Antrieb zur Rotation des ersten Rotorblatts (100) für eine Pitchregelung des ersten Rotorblatts;
zumindest ein zweites Rotorblatt, das an der Nabe (44) montiert ist;
zumindest ein zweiter Antrieb zur Rotation des zweiten Rotorblatts für eine Pitchregelung des zweiten Rotorblatts, wobei der zweite Antrieb unabhängig vom ersten Antrieb ansteuerbar ist;
eine Steuerung zum Ansteuern von zumindest dem ersten Antrieb;
einen faseroptischen Beschleunigungssensor (110) in dem ersten Rotorblatt (100) der Windkraftanlage;
einen opto-elektronischen Wandler (702) zum Wandeln eines Signals des faseroptischen Beschleunigungssensors (110);
einen analogen Anti-aliasing-Filter (710) konfiguriert zum Filtern des opto-elektronisch gewandelten Beschleunigungssignals;
Mittel zum Hochpassfiltern des Signals des faseroptischen Beschleunigungssensors (110) zur Ermittlung einer zeitveränderlichen Größe; und
eine Steuerung, wobei die Steuerung konfiguriert ist ein Pitchen des ersten Rotorblatts (100) mittels der zeitveränderlichen Größe zu steuern.

12. Die Windkraftanlage gemäß Anspruch 11, wobei der faseroptische Beschleunigungssensor (110) an einer radialen Position im Bereich der äußeren 70% des Radius des ersten Rotorblatts (100) zur Verfügung gestellt ist, insbesondere wobei der Beschleunigungssensor in den äußeren 50% des Radius des Rotorblatts, weiterhin insbesondere in einem Bereich von 60% bis 90% des Radius des Rotorblatts zur Verfügung gestellt ist.

13. Die Windkraftanlage gemäß einem der Ansprüche 11 bis 12, wobei der Beschleunigungssensor (110) zu weniger als 10 Gew.-% aus Metall besteht oder weniger als 20 g Metall enthält.

14. Die Windkraftanlage gemäß einem der Ansprüche 11 bis 13, weiterhin umfassend: einen Lichtleiter (112), der vom faseroptischen Beschleunigungssensor (110) bis zu einer radialen Rotorblattposition geführt ist, an der das Rotorblatt (100) begehbar ist.

15. Die Windkraftanlage gemäß Anspruch 14, wobei der faseroptische Beschleunigungssensor (110) eine maximale Ausdehnung von 10 mm in einem Querschnitt senkrecht zu einer Achse des Lichtleiters (112) hat.

16. Die Windkraftanlage gemäß einem der Ansprüche 14 bis 15, wobei der Lichtleiter (112) an der Hinterkante (109) des Rotorblatts (100) zur Verfügung gestellt ist.

**Claims**

1. A method for the individual pitch control of rotor blades (100) of a wind turbine (200), comprising:

measuring acceleration by means of a fiber-optic acceleration sensor (110) in a rotor blade (100) of the wind turbine (200);
opto-electronically converting (702) a signal of the fiber-optic acceleration sensor (110);
filtering the opto-electronically converted acceleration signal by means of an analog anti-aliasing filter (710);
high-pass filtering the signal of the fiber-optic acceleration sensor (110) to determine a time-variable parameter, and
setting the pitch of the rotor blade (100) of the wind turbine (200) using the time-variable parameter, said pitch setting being performed in the course of an individual pitch control.

2. The method according to claim 1, wherein the fiber-optic acceleration sensor (110) is provided at a radial position in the range of the outer 70% of the radius of a first rotor blade (100), wherein in particular the acceleration sensor is provided in the outer 50% of the rotor blade radius, further in particular in a range of 60% to 90% of the rotor blade radius.

3. The method according to any one of claims 1 to 2, wherein the high-pass filtering is performed by forming a time derivative, by high-pass filtering and/or by means of Fourier transformation.

4. The method according to any one of claims 1 to 3, wherein the high-pass filtering has a cutoff frequency from 0.3 to 0.5 Hz, wherein in particular the high-pass filtering has a suppression of a signal of 0.2 Hz relative to a signal of 0.6 of at least a factor 5.

5. The method according to any of claims 1 to 4, wherein the filtering of the opto-electronically converted acceleration signal by means of the analog anti-aliasing filter (710) has a cutoff frequency from 10 Hz to 40 Hz, in particular from 15 Hz to 25 Hz.

6. The method according to any one of claims 1 to 5, wherein the signal of the fiber-optic acceleration sensor (110) is guided to the hub (44) by means of a light conductor (112), wherein the light conductor (112) is provided at the rear edge (109) of the rotor blade (100).

7. The method according to claim 6, wherein the light conductor (112) is provided on a profile (150) provided at the rear edge (109) of the rotor blade (100).

8. The method according to claim 7, wherein the profile (150) is a pultruded profile and/or wherein the profile (150) causes the rotor blade (100) to be aerodynamically influenced.

9. The method according to any one of claims 7 to 8, wherein the profile (150) extends along at least 10% or at least 30% of the rotor blade radius, wherein in particular one or more segments of the profile extend along at least 10% or at least 30% of the rotor blade radius.

10. The method according to any one of claims 6 to 9, wherein the light conductor (112) is guided into the rotor blade interior from outside at a radial position where the rotor blade (100) can be walked in.

11. A wind turbine (200), comprising:

 a first rotor blade (100) mounted to a hub (44);
 a first drive unit for rotating the first rotor blade (100) for a pitch control of the first rotor blade;
 at least one second rotor blade mounted to the hub (44);
 at least one second drive unit for rotating the second rotor blade for a pitch control of the second rotor blade, wherein the second drive unit is controllable independent of the first drive unit;
 a control unit for controlling at least the first drive unit;
 a fiber-optic acceleration sensor (100) in the wind turbine's first rotor blade (100);
 an opto-electronic converter (702) for converting a signal of the fiber-optic acceleration sensor (110);
 an analog anti-aliasing filter (710) configured to filter the opto-electronically converted acceleration signal;
 means for high-pass filtering the signal of the fiber-optic acceleration sensor (110) to determine a time-variable parameter; and
 a control unit, wherein the control unit is configured to control pitching of the first rotor blade (100) using the time-variable parameter.

12. The wind turbine according to claim 11, wherein the fiber-optic acceleration sensor (110) is provided at a radial position in the range of the outer 70% of the radius of the first rotor blade (100), wherein in particular the first acceleration sensor is provided in the outer 50% of the rotor blade radius, further in particular in a range of 60% to 90% of the rotor blade radius.

13. The wind turbine according to any one of claims 11 to 12, wherein the acceleration sensor (110) is made of less than 10% by weight from metal or contains less than 20 g of metal.

14. The wind turbine according to any one of claims 11 to 13, furthermore comprising:
 a light conductor (112) which is guided from the fiber-optic acceleration sensor (110) to a radial rotor blade position where the rotor blade (100) can be walked in.

15. The wind turbine according to claim 14, wherein the fiber-optic acceleration sensor (110) has a maximum expansion of 10 mm in a cross-section perpendicular to an axis of the light conductor (112).

16. The wind turbine according to any one of claims 14 to 15, wherein the light conductor (112) is provided at the rear edge (109) of the rotor blade (100).

## Revendications

1. Procédé pour réguler individuellement l'angle d'incidence de pales de rotor (100) d'une éolienne (200), comprenant :

 la mesure d'une accélération avec un capteur d'accélération à fibres optiques (110) dans une pale de rotor (100) de l'éolienne (200) ;
 la conversion optoélectronique (702) d'un signal du capteur d'accélération à fibres optiques (110) ;
 le filtrage du signal d'accélération converti optoélectroniquement avec un filtre anticrénelage analogique (710) ;
 le filtrage passe-haut du signal du capteur d'accélération à fibres optiques (110) pour déterminer une grandeur variable dans le temps, et
 le réglage de l'angle d'incidence de la pale de rotor (100) de l'éolienne (200) moyennant la grandeur variable dans le temps, sachant que le réglage de l'angle d'incidence s'effectue dans le cadre d'un réglage de l'angle d'incidence individuel.

**2.** Procédé selon la revendication 1, sachant que le capteur d'accélération à fibres optiques (110) est mis à disposition dans une position radiale dans la zone des 70 % extérieurs du rayon d'une première pale de rotor (100), en particulier sachant que le capteur d'accélération est mis à disposition dans les 50 % extérieurs du rayon de la pale de rotor, plus particulièrement dans une zone de 60 % à 90 % du rayon de la pale de rotor.

**3.** Procédé selon l'une des revendications 1 à 2, sachant que le filtrage passe-haut est effectué par formation d'une dérivée par rapport au temps, par filtrage passe-haut, et/ou moyennant une transformée de Fourier.

**4.** Procédé selon l'une des revendications 1 à 3, sachant que le filtrage passe-haut présente une fréquence limite de 0,3 à 0,5 Hz, en particulier sachant que le filtrage passe-haut présente une suppression d'un signal de 0,2 Hz par rapport à un signal de 0,6 d'au moins un facteur 5.

**5.** Procédé selon l'une des revendications 1 à 4, sachant que le filtrage du signal d'accélération converti optoélectroniquement avec le filtre anticrénelage analogique (710) présente une fréquence de coupure de 10 Hz à 40 Hz, en particulier de 15 Hz à 25 Hz.

**6.** Procédé selon l'une des revendications 1 à 5, sachant que le signal du capteur d'accélération à fibres optiques (110) est mené au moyeu (44) avec un guide optique (112), sachant que le guide optique (112) est mis à disposition au niveau du bord arrière (109) de la pale de rotor (100).

**7.** Procédé selon la revendication 6, sachant que le guide optique (112) est mis à disposition au niveau d'un profilé (150) mis à disposition au niveau d'un bord arrière (109) de la pale de rotor (100).

**8.** Procédé selon la revendication 7, sachant que le profilé (150) est un profilé pultrudé et/ou le profilé (150) provoque une influence aérodynamique de la pale de rotor (100).

**9.** Procédé selon l'une des revendications 7 à 8, sachant que le profilé (150) s'étend le long d'au moins 10 % ou d'au moins 30 % du rayon de la pale de rotor (100), en particulier sachant qu'un ou plusieurs segments du profilé s'étendent le long d'au moins 10 % ou d'au moins 30 % du rayon de la pale de rotor.

**10.** Procédé selon l'une des revendications 6 à 9, sachant que le guide optique (112) est mené de l'extérieur dans l'intérieur de la pale de rotor dans une position radiale dans laquelle la pale de rotor (100) est accessible à pied.

**11.** Éolienne (200), comprenant :

une première pale de rotor (100) qui est montée sur un moyeu (44) ;
un premier entraînement pour la rotation de la première pale de rotor (100) pour un réglage de l'angle d'incidence de la première pale de rotor ;
au moins une deuxième pale de rotor qui est montée sur le moyeu (44) ;
au moins un deuxième entraînement pour la rotation de la deuxième pale de rotor pour un réglage de l'angle d'incidence de la deuxième pale de rotor, sachant que le deuxième entraînement est pilotable indépendamment du premier entraînement ;
un organe de commande pour le pilotage d'au moins le premier entraînement ;
un capteur d'accélération à fibres optiques (110) dans la première pale de rotor (100) de l'éolienne ;
un convertisseur optoélectronique (702) pour la conversion d'u signal du capteur d'accélération à fibres optiques (110) ;
un filtre anticrénelage analogique (710) configuré pour filtrer le signal d'accélération converti optoélectroniquement ;
des moyens pour le filtrage passe-haut du signal du capteur d'accélération à fibres optiques (100) pour déterminer une grandeur variable dans le temps ; et
un organe de commande, sachant que l'organe de commande est configurée pour commander un réglage de l'angle d'incidence de la première pale de rotor (100) moyennant la grandeur variable dans le temps.

**12.** L'éolienne selon la revendication 11, sachant que le capteur d'accélération à fibres optiques (110) est mis à disposition dans une position radiale dans la zone des 70 % extérieurs du rayon de la première pale de rotor (100), en particulier sachant que le capteur d'accélération est mis à disposition dans les 50 % extérieurs du rayon de la pale de rotor, plus particulièrement dans une zone de 60 % à 90 % du rayon de la pale de rotor.

**13.** L'éolienne selon l'une des revendications 11 à 12, sachant que le capteur d'accélération (110) est constitué de métal à raison de moins de 10 % en poids ou contient du métal à raison de moins de 20 g.

**14.** L'éolienne selon l'une des revendications 11 à 13, comprenant en outre :
un guide optique (112) qui est mené du capteur d'accélération à fibres optiques (110) à une position radiale de pale de rotor dans laquelle la pale de rotor (100) est accessible.

15. L'éolienne selon la revendication 4, sachant que le capteur d'accélération à fibres optiques (110) présente un allongement maximal de 10 mm dans une section transversale perpendiculairement à un axe du guide optique (112).

16. L'éolienne selon l'une des revendications 14 à 15, sachant que le guide optique (112) est mis à disposition au niveau du bord arrière (109) de la pale de rotor (100).

# Fig. 1

# Fig. 2

**Fig. 3**

**Fig. 4**

Fig. 5

Fig. 6

Fig. 7

Fig. 7A

**Fig. 8A**

**Fig. 8B**

## Fig. 9A

## Fig. 9B

Fig. 10

Fig. 11

# Fig. 11A

150

109

151

153

157

112 152

## Fig. 12

## Fig. 13A

Fig. 13B

Fig. 14

Fig. 15

## Fig. 16

```
┌─────────────────────────┐
│      Messen einer       │
│   Beschleunigung wird mit│ ──── 972
│   einem faseroptischen   │
│  Beschleunigungssensor   │
└─────────────────────────┘
             │
             │          ──── 974
             ▼
┌─────────────────────────┐
│      Filtern des        │
│  Beschleunigungssignals  │
│  mit einem analogen anti-│
│      aliasing-Filter     │
└─────────────────────────┘
```

## Fig. 17

```
┌──────────────────────────────┐
│  Messen einer Beschleunigung mit│ ──── 982
│ einem  Beschleunigungssensor, der zu│
│  weniger als 10 Gew.-% aus Metall│
│ besteht oder weniger als 20 g Metall│
│            enthält             │
└──────────────────────────────┘
```

# Fig. 18

Messen einer
Beschleunigung wird mit
einem faseroptischen
Beschleunidungssensor — 992

Pitchen eines Rotorblatts
mittels der gemessenen
Beschleunigung — 994

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012125842 A1
- DE 102012108776 A1
- WO 2010099928 A1